# EUROPÄISCHE PATENTANMELDUNG

(11) **EP 3 913 713 A1**
(43) Veröffentlichungstag der Anmeldung: **24.11.2021**
(21) Anmeldenummer: 20176004.8
(22) Anmeldetag: 22.05.2020
(51) Int. Cl.: H01M 8/2404, H01M 8/241, H01M 8/1004, H01M 8/1018

(54) **VERFAHREN UND VORRICHTUNG ZUM HERSTELLEN EINER ZUMINDEST EIN ERSTES ZELLSTAPELELEMENT UND ZUMINDEST EIN ZWEITES ZELLSTAPELELEMENT UMFASSENDEN SCHICHTANORDNUNG**

(71) Anmelder: Grob-Werke GmbH & Co. KG, 87719 Mindelheim (DE)
(72) Erfinder: Janusch, Tim, 87746 Erkheim (DE)
(74) Vertreter: KASTEL Patentanwälte PartG mbB

(57) **Zusammenfassung**

Die Erfindung betrifft ein Verfahren zum Herstellen einer zumindest ein erstes Zellstapelelement (12) und zumindest ein zweites Zellstapelelement (14) umfassenden Schichtanordnung für einen Zellstapel einer Brennstoffzelle. Bei dem Verfahren wird ein bahnförmiges erstes Zellstapelelementsubstrat (16) bereitgestellt. Anschließend wird das bahnförmige Zellstapelelementsubstrat (16) zu einer Stapeleinrichtung (26) gefördert und einzelne erste Zellstapelelemente (12) von dem Zellstapelelementsubstrat (16) beim Einführen in die Stapeleinrichtung (26) abgetrennt. In einem weiteren Verfahrensschritt werden einzelne zweite Zellstapelelemente (14) an der Stapeleinrichtung (26) bereitgestellt. Schließlich werden einzelne erste Zellstapelelemente (12) und zweite Zellstapelelemente (14) in der Stapeleinrichtung (26) aufeinandergestapelt.

## Beschreibung

Die Erfindung betrifft ein Verfahren zum Herstellen einer zumindest ein erstes Zellstapelelement und zumindest ein zweites Zellstapelelement umfassenden Schichtanordnung für einen Zellstapel einer Brennstoffzelle. Die Erfindung betrifft auch eine Vorrichtung zum Herstellen einer zumindest ein erstes Zellstapelelement und zumindest ein zweites Zellstapelelement umfassenden Schichtanordnung für einen Zellstapel einer Brennstoffzelle. Schließlich gehört zu der Erfindung auch ein Computerprogrammprodukt.

Im Bereich der automatisierten Herstellung von Brennstoffzellen, der sogenannten Stack-Assemblierung, wird vorrangig auf ein Pick-and-Place Verfahren zur Herstellung eines Brennstoffzellen-Stacks zurückgegriffen. Das Prinzip des Pick-and-Place Verfahrens besteht darin, Wiederholeinheiten, welche Bipolarplatten und/oder Membran-Elektrodeneinheiten umfassen, im Wechsel oder abwechselnd, bis zum Erreichen einer entsprechend geforderten Zellanzahl, durch Greifen, Transportieren, Positionieren und Ablegen aufeinanderzustapeln oder auf Randkomponenten aufzuschichten. Als Randkomponenten können dabei Endplatten bezeichnet werden, die den Abschluss der in Reihe geschalteten Wiederholeinheiten oder der dadurch entstandenen Einzelzellschichten bilden. In diesen Endplatten können weitere Komponenten integriert sein, welche für die Funktion des Brennstoffzellen-Stacks erforderlich sein können. Beispielsweise kann es sich bei den weiteren Komponenten um Stromabnehmer und/oder Unipolarplatten und/oder Druckverteilerplatten handeln.

Die Zuführung der Wiederholeinheiten in den Stapelprozess einer automatisierten Stack-Assemblierung kann durch die Entnahme aus magazinähnlichen Vorratsbehältern stattfinden. Dieser Entnahmeprozess der Wiederholeinheiten oder Wiederholkomponenten kann durch auf die Bauteile angepasste Greifersysteme, insbesondere in Kombination mit Linearportalen oder Robotersystemen, erfolgen.

Aufgrund einer kontinuierlich steigenden Nachfrage an Brennstoffzellen und der damit verbundenen Forderung nach einer Verringerung der Taktzeit des Stapelprozesses folgt damit einhergehend ein wachsender Bedarf an Einzelkomponenten. Nachdem momentan bei einem Pick-and-Place Verfahren die Zuführung der Wiederholeinheiten in Magazinen oder Vorratsbehältern einzeln erfolgt, resultiert unter Berücksichtigung der angestrebten Stückzahl an Brennstoffzellen-Stacks ein enormer logistischer und kostenintensiver Aufwand der Materialbereitstellung. Zudem ist es erforderlich, die Komponenten bei der Be- und Entladung der Vorratsbehälter und dem eigentlichen Stapelprozess mehreren Handhabungsschritten zu unterziehen, wodurch die Gefahr einer Bauteilbeschädigung ansteigt.

Zum Bereitstellen einzelner Membranelektrodeneinheiten ist in der DE 10 2019 102 193 A1 eine Schneidvorrichtung für eine Membranelektroden- und Gasdiffusionsschichtanordnung, die in einer Brennstoffzelle umfasst ist, beschrieben. Die Membranelekrodenschichtanordnung und die Gasdiffusionsschichtanordnung sind dabei in bahnartiger Form ausgestaltet. Die Schneidvorrichtung ist dazu eingerichtet, mit einem Schneidmechanismus eine relevante Membranelekrodenschichtanordnung in bahnartiger Form aus dem Werkstück herauszuschneiden. Die Membranelekrodenschichtanordnung wird durch eine Hebevorrichtung von dem Schneidmechanismus zu einer Fördervorrichtung bewegt und darauf platziert, um diese zu einem nachfolgenden Schritt zu befördern. Der Schneidmechanismus umfasst ein Obergesenk, ein Untergesenk und einen Werkstückhalter. Das Obergesenk und das Untergesenk dienen jeweils als Stempel, die sich so in Auf-Ab-Richtung bewegen, dass sie sich relativ aneinander annähern, wobei das Werkstück dazwischen gehalten wird, um das Werkstück durch Abscheren zu stanzen, um so die Membranelekrodenschichtanordnung aus dem Werkstück herauszuschneiden.

Die Erfindung hat sich zur Aufgabe gestellt, eine Vorrichtung und ein Verfahren zum Herstellen einer zumindest ein erstes Zellstapelelement und zumindest ein zweites Zellstapelelement umfassenden Schichtanordnung für einen Zellstapel einer Brennstoffzelle, insbesondere hinsichtlich der Herstellungszeit und/oder des Handlings, zu verbessern.

Diese Aufgabe wird durch eine Vorrichtung und ein Verfahren zum Herstellen einer zumindest ein erstes Zellstapelelement und zumindest ein zweites Zellstapelelement umfassenden Schichtanordnung für einen Zellstapel einer Brennstoffzelle sowie durch ein Computerprogrammprodukt mit den Merkmalen der unabhängigen Patentansprüche gelöst. Vorteilhafte Ausgestaltungen mit zweckmäßigen und nicht trivialen Weiterbildungen der Erfindung sind in den abhängigen Patentansprüchen angegeben.

Die Erfindung schafft ein Verfahren zum Herstellen einer zumindest ein erstes Zellstapelelement und zumindest ein zweites Zellstapelelement umfassenden Schichtanordnung für einen Zellstapel einer Brennstoffzelle. Mit "Schichtanordnung" sind insbesondere geschichtete oder aneinander angeordnete Zellstapelelemente oder Komponenten eines Zellstapels einer Brennstoffzelle gemeint. Mit "Zellstapelelement" ist insbesondere eine Komponente, insbesondere Schichtkomponente, oder Lage des Zellstapels der Brennstoffzelle gemeint. Beispielsweise können die Zellstapelelemente als Bipolarplatten und/oder als Membran-Elektrodeneinheiten ausgebildet sein. Bevorzugt weisen die ersten Zellstapelelemente und/oder die zweiten Zellstapelelemente eine rechteckige oder plattenförmige Form auf. Bei dem Verfahren wird in einem Verfahrensschritt a) ein bahnförmiges erstes Zellstapelelementsubstrat bereitgestellt. Mit "bahnförmig" ist insbesondere gemeint, dass das erste Zellstapelelementsubstrat als eine Bahn oder als ein Band oder bandförmig oder als Streifen bereitgestellt wird. In einem weiteren Verfahrensschritt b) wird das bahnförmige erste Zellstapelelementsubstrat zu einer Stapeleinrichtung gefördert und einzelne erste Zellstapelelemente von dem ersten Zellstapelelementsubstrat beim Einführen in die Stapeleinrichtung abgetrennt. Mit anderen Worten können die einzelnen ersten Zellstapelelemente an einem Zuführbereich, an dem das erste Zellstapelelementsubstrat in die Stapeleinrichtung eingeführt wird, abgetrennt werden. In einem weiteren Verfahrensschritt c) werden einzelne zweite Zellstapelelemente an der Stapeleinrichtung bereitgestellt. Anschließend werden die einzelnen ersten Zellstapelelemente und die zweiten Zellstapelelemente in einem Verfahrensschritt d) in der Stapeleinrichtung aufeinandergestapelt. Die ersten Zellstapelelemente und die zweiten Zellstapelelemente werden also insbesondere der Stapeleinrichtung einzeln zugeführt und darin schichtweise, insbesondere abwechselnd, aufeinander angeordnet. Bevorzugt ist die Stapeleinrichtung dazu eingerichtet, die ersten Zellstapelelemente und die zweiten Zellstapelelemente, insbesondere zum Bilden oder Herstellen des Zellstapels, aufzunehmen. Mit "aufeinanderstapeln" ist insbesondere gemeint, dass die Zellstapelelemente in eine Hochrichtung der Vorrichtung oder der Stapeleinrichtung geschichtet oder aneinander oder übereinander angeordnet werden.

Durch das Verfahren ergibt sich der Vorteil, dass es besonders schnell, einfach und zuverlässig zum Herstellen eines Zellstapels durchgeführt werden kann. Ferner ist durch das Verfahren eine Gefahr einer Beschädigung der Komponenten - der ersten Zellstapelelemente und der zweiten Zellstapelelemente - besonders gering. Zudem ist durch das Verfahren eine Taktfrequenz des Stapelprozesses besonders hoch, wodurch das Verfahren besonders schnell durchführbar ist.

Eine vorteilhafte Ausführungsform sieht vor, dass der Verfahrensschritt a) wenigstens einen oder mehrere der folgenden Schritte umfassen kann. Bevorzugt kann das erste Zellstapelelementsubstrat als erste Rollenware bereitgestellt werden. Mit "Rollenware" ist insbesondere gemeint, dass das bahnförmige erste Zellstapelelementsubstrat, bevorzugt auf einer Rolle oder Materialrolle, aufgerollt ist. Zusätzlich oder alternativ kann das erste Zellstapelelementsubstrat auf einer Vorratsrolle bereitgestellt werden. Mit anderen Worten kann das erste Zellstapelelementsubstrat als Meterware bereitgestellt werden. Die Rollenware oder Vorratsrolle hat den Vorteil, dass auf besonders einfache Art und Weise das erste Zellstapelelementsubstrat oder erste Zellstapelelemente bereitgestellt werden kann oder können. Zudem kann eine Rollenware oder Vorratsrolle besonders einfach und zuverlässig transportiert und gehandelt werden. Zusätzlich oder alternativ kann ein bahnförmiges Material zum Bilden einer Wiederholkomponente eines Zellstapels einer Brennstoffzelle als erstes Zellstapelelementsubstrat bereitgestellt werden. Das Zellstapelelement, welches auch als Wiederholkomponente bezeichnet werden kann, kann bevorzugt eine oder mehrere Bipolarplatten und/oder eine oder mehrere Membran-Elektrodeneinheiten umfassen. Zusätzlich oder alternativ kann ein bahnförmiges Membran-Elektrodeneinheit-Material, aus dem durch Vereinzeln Membran-Elektrodeneinheiten als erste Zellstapelelemente gebildet werden, oder ein bahnförmiges Bipolarplatten-Material, aus dem durch Vereinzeln Bipolarplatten als erste Zellstapelelemente gebildet werden, bereitgestellt werden. Mit "Vereinzeln" ist insbesondere ein Abtrennen oder Abschneiden von dem ersten Zellstapelelementsubstrat gemeint. Zusätzlich oder alternativ kann ein bahnförmiges Folienmaterial, welches die einzelnen ersten Zellstapelelemente bildet, als erstes Zellstapelelementsubstrat bereitgestellt werden, wobei die ersten Zellstapelelemente mit einem Verschnitt vereinzelt werden, sodass ein Rand der einzelnen Zellstapelelemente mit einer Randverstärkungsfolie ausgebildet ist. Mit anderen Worten können erste Zellstapelelemente durch eine Folienbahn gebildet sein oder bereitgestellt werden. Hierbei weist die Folienbahn bevorzugt keine Abschnitte auf, die nicht Bestandteil der Zellstapelelemente wären. Mit "Randverstärkungsfolie" ist insbesondere gemeint, dass ein, insbesondere folienartiger, Rand um das erste Zellstapelelement angeordnet ist. Mit anderen Worten kann das erste Zellstapelelement, insbesondere durch einen Folieabschnitt, umrandet sein. Zusätzlich oder alternativ kann das erste Zellstapelelementsubstrat mittels einer ersten Abwickeleinheit einer Abwickeleinrichtung von einer ersten Rolle abgewickelt werden. Mit anderen Worten kann das erste Zellstapelelementsubstrat als erste Rolle bereitgestellt werden und durch die erste Abwickeleinheit ausgerollt werden. Hierdurch ergibt sich der Vorteil, dass auf besonders einfache und zuverlässige Art und Weise das erste Zellstapelelementsubstrat abgewickelt und in weiteren Verarbeitungsschritten verarbeitet werden kann.

Zusätzlich oder alternativ kann Verfahrensschritt b) wenigstens einen oder mehrere der folgenden Schritte umfassen. Bevorzugt kann das bahnförmige erste Zellstapelelementsubstrat zu einer an der Stapeleinrichtung ausgebildeten Trenneinrichtung befördert werden. Dabei kann das bahnförmige erste Zellstapelelementsubstrat von einer Zellstapelelementsubstratbereitstelleinrichtung zu der an der Stapeleinrichtung angeordneten Trenneinrichtung befördert und transportiert oder geleitet werden. Alternativ kann die Trenneinrichtung als eine von der Stapeleinrichtung unabhängig oder eigenständig ausgebildete Einrichtung sein. Durch die Trenneinrichtung können die ersten Zellstapelelemente auf besonders einfache und zuverlässige Art und Weise von dem ersten Zellstapelelementsubstrat abgetrennt werden. Zusätzlich oder alternativ kann das bahnförmige erste Zellstapelelementsubstrat zu einer an einer Zuführung der Stapeleinrichtung angeordneten ersten Trenneinheit einer Trenneinrichtung befördert oder bewegt oder transportiert werden und die ersten Zellstapelelemente mittels der ersten Trenneinheit abgetrennt werden. Beispielsweise kann die erste Trenneinheit als ein Laser oder eine Schneidvorrichtung oder eine Stanzvorrichtung ausgebildet sein. Die Trenneinheit kann alternativ auch von der Stapeleinrichtung beabstandet, insbesondere als eigenständige oder unabhängige Trenneinheit, angeordnet sein. Durch die erste Trenneinheit können auf besonders einfache und schnelle Art und Weise die ersten Zellstapelelemente bereitgestellt werden. Zusätzlich oder alternativ kann das bahnförmige erste Zellstapelelementsubstrat mittels einer ersten Beförderungseinheit einer Beförderungseinrichtung befördert oder transportiert oder bewegt werden. Hierdurch ergibt sich der Vorteil, dass das erste Zellstapelelementsubstrat auf besonders einfache und zuverlässige Art und Weise befördert werden kann. Zusätzlich oder alternativ können mehrere Teile des bahnförmigen ersten Zellstapelelementsubstrats in vorbestimmten zeitlichen Abständen zu mehreren ersten Zellstapelelementen abgetrennt werden. Mit anderen Worten können, insbesondere zeitlich, nacheinander einzelne Teile von dem ersten Zellstapelelementsubstrats abgetrennt werden. Insbesondere bilden die abgetrennten Teile die ersten Zellstapelelemente des Zellstapels aus. Zusätzlich oder alternativ können die einzelnen abgetrennten ersten Zellstapelelemente in die Stapeleinrichtung zum Bilden der Schichtanordnung zugeführt oder eingeführt oder eingelegt oder eingeschoben werden. Beispielsweise kann die Stapeleinrichtung eine Öffnung oder einen Zuführ- oder Einführbereich aufweisen, über welche oder welchen die ersten Zellstapelelemente in die Stapeleinrichtung gelangen. Damit können die ersten Zellstapelelemente der Stapeleinrichtung sicher zugeführt werden.

In vorteilhafter Weise kann Verfahrensschritt c) wenigstens einen oder mehrere der folgenden Schritte umfassen. Bevorzugt wird ein zweites Zellstapelelementsubstrat als bahnförmiges zweites Zellstapelelementsubstrat bereitgestellt und einzelne zweite Zellstapelelemente werden von dem zweiten Zellstapelelementsubstrat abgetrennt. Mit "bahnförmig" ist insbesondere gemeint, dass das zweite Zellstapelelementsubstrat als ein Band oder als eine Bahn oder bandförmig oder als Streifen bereitgestellt wird. Zusätzlich oder alternativ kann ein zweites Zellstapelelementsubstrat als zweite Rollenware bereitgestellt werden und einzelne zweite Zellstapelelemente von dem zweiten Zellstapelelementsubstrat abgetrennt werden. Mit "Rollenware" ist insbesondere gemeint, dass das bahnförmige zweite Zellstapelelementsubstrat, bevorzugt auf einer Rolle oder Materialrolle, aufgerollt ist. Zusätzlich oder alternativ kann ein zweites Zellstapelelementsubstrat auf einer Vorratsrolle bereitgestellt werden und einzelne zweite Zellstapelelemente von dem zweiten Zellstapelelementsubstrat abgetrennt werden. Zusätzlich oder alternativ kann das zweite Zellstapelelementsubstrat als Meterware bereitgestellt werden. Hierdurch ergibt sich der Vorteil, dass auf besonders einfache Art und Weise das zweite Zellstapelelementsubstrat und/oder das zweite Zellstapelelement bereitgestellt werden kann. Zudem kann eine Rollenware oder Vorratsrolle besonders einfach und zuverlässig transportiert und gehandelt werden. Zusätzlich oder alternativ kann ein bahnförmiges Material zum Bilden einer Wiederholkomponente eines Zellstapels einer Brennstoffzelle als zweites Zellstapelelementsubstrat bereitgestellt werden und einzelne zweite Zellstapelelemente von dem zweiten Zellstapelelementsubstrat abgetrennt werden. Die zweiten Zellstapelelemente, welche auch als Wiederholkomponente bezeichnet werden können, können bevorzugt eine oder mehrere Bipolarplatten und/oder eine oder mehrere Membran-Elektrodeneinheiten umfassen. Zusätzlich oder alternativ kann ein bahnförmiges Membran-Elektrodeneinheit-Material, aus dem durch Vereinzeln Membran-Elektrodeneinheiten als zweite Zellstapelelemente gebildet werden, oder ein bahnförmiges Bipolarplatten-Material, aus dem durch Vereinzeln Bipolarplatten als zweite Zellstapelelemente gebildet werden, bereitgestellt werden. Mit "Vereinzeln" ist insbesondere ein Abtrennen oder Abschneiden von dem zweiten Zellstapelelementsubstrat gemeint. Zusätzlich oder alternativ kann ein bahnförmiges Folienmaterial, welches die einzelnen zweiten Zellstapelelemente bildet, als zweites Zellstapelelementsubstrat bereitgestellt werden, wobei die zweiten Zellstapelelemente mit einem Verschnitt vereinzelt werden, sodass ein Rand der einzelnen Zellstapelelemente mit einer Randverstärkungsfolie ausgebildet ist. Mit anderen Worten können die zweiten Zellstapelelemente durch eine Folienbahn gebildet sein oder bereitgestellt werden. Hierbei weist die Folienbahn bevorzugt keine Abschnitte auf, die nicht Bestandteil der Zellstapelelemente wären. Mit "Randverstärkungsfolie" ist insbesondere gemeint, dass ein, insbesondere folienartiger, Rand um das zweite Zellstapelelement angeordnet ist. Mit anderen Worten kann das zweite Zellstapelelement, insbesondere durch einen Folienabschnitt, umrandet sein. Hierdurch ergibt sich der Vorteil, dass auf besonders einfache und zuverlässige Art und Weise das zweite Zellstapelelementsubstrat abgewickelt und in weiteren Verarbeitungsschritten verarbeitet werden kann. Zusätzlich oder alternativ kann ein zweites Zellstapelelementsubstrat mittels einer zweiten Abwickeleinheit einer Abwickeleinrichtung von einer zweiten Rolle abgewickelt werden und einzelne zweite Zellstapelelemente von dem zweiten Zellstapelelementsubstrat abgetrennt werden. Mit anderen Worten kann das zweite Zellstapelelementsubstrat als zweite Rolle bereitgestellt werden und durch die zweite Abwickeleinheit ausgerollt werden. Hierdurch ergibt sich der Vorteil, dass auf besonders einfache und zuverlässige Art und Weise das zweite Zellstapelelementsubstrat abgewickelt und in weiteren Verarbeitungsschritten verarbeitet werden kann. Zusätzlich oder alternativ kann das zweite Zellstapelelementsubstrat zu der Stapeleinrichtung gefördert werden und einzelne zweite Zellstapelelemente von dem zweiten Zellstapelelementsubstrat beim Einführen in die Stapeleinrichtung abgetrennt werden. Mit anderen Worten können die einzelnen zweiten Zellstapelelemente an einem Zuführbereich, an dem das zweite Zellstapelelementsubstrat in die Stapeleinrichtung eingeführt wird, abgetrennt werden. Zusätzlich oder alternativ kann ein zweites Zellstapelelementsubstrat zu der an der Stapeleinrichtung ausgebildeten Trenneinrichtung gefördert und einzelne zweite Zellstapelelemente von dem zweiten Zellstapelelementsubstrat mittels der Trenneinrichtung abgetrennt werden. Dabei kann das bahnförmige zweite Zellstapelelementsubstrat von einer zweiten Zellstapelelementsubstratbereitstelleinrichtung oder einer Zellstapelelementbereitstelleinrichtung zu der an der Stapeleinrichtung angeordneten Trenneinrichtung befördert und transportiert oder geleitet werden.

Alternativ kann die Trenneinrichtung als von der Stapeleinrichtung unabhängig oder eigenständig ausgebildete Einrichtung sein. Durch die Trenneinrichtung können die zweiten Zellstapelelemente auf besonders einfache und zuverlässige Art und Weise abgetrennt werden. Zusätzlich oder alternativ kann ein zweites Zellstapelelementsubstrat zu einer an einer Zuführung der Stapeleinrichtung angeordneten ersten Trenneinheit oder zweiten Trenneinheit einer Trenneinrichtung gefördert werden und einzelne zweite Zellstapelelemente von dem zweiten Zellstapelelementsubstrat mittels der ersten Trenneinheit oder der zweiten Trenneinheit abgetrennt werden. Entweder können die zweiten Zellstapelelemente durch die auch für das erste Zellstapelelementsubstrat oder die ersten Zellstapelelemente verwendete erste Trenneinheit oder durch eine eigene zweite Trenneinheit der Trenneinrichtung abgetrennt werden. Insbesondere bilden die abgetrennten Teile die zweiten Zellstapelelemente des Zellstapels aus. Beispielsweise können die erste Trenneinheit oder die zweite Trenneinheit als ein Laser oder eine Schneidvorrichtung oder eine Stanzvorrichtung ausgebildet sein. Die jeweilige Trenneinheit kann alternativ auch von der Stapeleinrichtung beabstandet, insbesondere als eigenständige oder unabhängige Trenneinheit, angeordnet sein. Durch die erste Trenneinheit oder die zweite Trenneinheit können auf besonders einfache und schnelle Art und Weise die zweiten Zellstapelelemente bereitgestellt werden. Zusätzlich oder alternativ kann ein zweites Zellstapelelementsubstrat mittels einer zweiten Beförderungseinheit einer Beförderungseinrichtung befördert werden. Hierdurch ergibt sich der Vorteil, dass das erste Zellstapelelementsubstrat auf besonders einfache und zuverlässige Art und Weise befördert werden kann. Zusätzlich oder alternativ können mehrerer Teile von einem zweiten Zellstapelelementsubstrat in vorbestimmten zeitlichen Abständen zu mehreren zweiten Zellstapelelementen abgetrennt werden. Bevorzugt können, insbesondere zeitlich, nacheinander einzelne Teile von dem zweiten Zellstapelelementsubstrat abgetrennt werden. Insbesondere bilden die abgetrennten Teile die zweiten Zellstapelelemente des Zellstapels aus. Zusätzlich oder alternativ können einzelne zweite Zellstapelelemente zum Bilden einer Wiederholkomponente eines Zellstapels einer Brennstoffzelle bereitgestellt werden. Zusätzlich oder alternativ können einzelne Membran-Elektrodeneinheiten und/oder Bipolarplatten als zweite Zellstapelelemente bereitgestellt werden. Zusätzlich oder alternativ können die einzelnen zweiten Zellstapelelemente mittels einer zweiten Beförderungseinheit einer Beförderungseinrichtung befördert werden. Hierdurch ergibt sich der Vorteil, dass die zweiten Zellstapelelemente auf besonders einfache und zuverlässige Art und Weise befördert werden können. Zusätzlich oder alternativ können die einzelnen zweiten Zellstapelelemente in die Stapeleinrichtung zum Bilden der Schichtanordnung zugeführt oder eingeführt oder eingelegt oder eingeschoben werden. Beispielsweise kann die Stapeleinrichtung eine Öffnung oder einen Zuführ- oder Einführbereich aufweisen, über welche oder welchen die zweiten Zellstapelelemente in die Stapeleinrichtung gelangen. Hierdurch können die zweiten Zellstapelelemente der Stapeleinrichtung besonders sicher zugeführt werden.

Gemäß einer vorteilhaften Weiterbildung ist es vorgesehen, dass Verfahrensschritt d) wenigstens einen oder mehrere der jeweiligen Schritte umfasst. Bevorzugt werden die ersten Zellstapelelemente und die zweiten Zellstapelelemente abwechselnd, insbesondere in der Stapeleinrichtung, aufeinandergestapelt. Zusätzlich oder alternativ können die ersten Zellstapelelemente und die zweiten Zellstapelelemente in die Stapeleinrichtung in zeitlich vorbestimmten Abständen oder gleichzeitig eingeführt oder eingeschoben werden. Werden die Zellstapelelemente insbesondere gleichzeitig zugeführt, so können die Zellstapelelemente, insbesondere in eine Hochrichtung der Vorrichtung, übereinander, beispielsweise durch übereinander versetzte Öffnungen oder Einführ- oder Zuführbereiche, zugeführt werden, sodass die ersten Zellstapelelemente und die zweiten Zellstapelelemente abwechselnd in der Stapeleinrichtung geschichtet werden können. Hierdurch können die Zellstapelelemente abwechselnd besonders einfach und schnell gestapelt werden. Zusätzlich oder alternativ können die ersten Zellstapelelemente und die zweiten Zellstapelelemente in die Stapeleinrichtung durch Zuführen der ersten Zellstapelelemente von einer Seite der Stapeleinrichtung und der zweiten Zellstapelelemente von der gegenüberliegenden Seite der Stapeleinrichtung eingeführt oder eingeschoben oder zugeführt werden. Zusätzlich oder alternativ können die ersten Zellstapelelemente und die zweiten Zellstapelelemente in die Stapeleinrichtung durch Zuführen der ersten Zellstapelelemente und der zweiten Zellstapelelemente von einer Seite der Stapeleinrichtung eingeführt werden. Mit anderen Worten können die ersten Zellstapelelemente und die zweiten Zellstapelelemente von der gleichen Seite der Stapeleinrichtung oder jeweils zu beiden Seiten der Stapeleinrichtung in die Stapeleinrichtung eingeführt werden. Zusätzlich oder alternativ können die ersten Zellstapelelemente und die zweiten Zellstapelelemente auf einem Träger aufeinandergestapelt oder abgelegt werden, wobei der Träger in eine Hochrichtung der Stapeleinrichtung oder der Vorrichtung bewegt wird, sodass eine Ablageposition, an welcher die Zellstapelelemente in der Stapeleinrichtung oder auf dem Träger abgelegt werden, gleich gehalten werden kann. Mit anderen Worten kann nach dem Ablegen der einzelnen Komponenten der Träger einen Höhenausgleich durchführen, sodass eine Ablageposition für die jeweiligen Komponenten - erstes Zellstapelelement oder zweites Zellstapelelement - auf einer konstanten Position oder gleich gehalten wird und/oder um eine Fallstrecke für die jeweiligen Komponenten nicht zu verändern. Zusätzlich oder alternativ kann eine Kraft durch eine an der Stapeleinrichtung angeordnete Düseneinrichtung, welche insbesondere zumindest eine Luftdüse und/oder zumindest eine Steuerdüse umfasst, auf die ersten Zellstapelelemente und/oder die zweiten Zellstapelelemente in der Stapeleinrichtung zum Unterstützen eines Einlegevorgangs in einen Aufnahmebereich oder Stapelbereich der Stapeleinrichtung zum Aufeinanderstapeln der ersten Zellstapelelemente und/oder der zweiten Zellstapelelemente ausgeübt werden. Mit anderen Worten kann die Düseneinrichtung, insbesondere von oben, auf die Zellstapelelemente, insbesondere durch Bereitstellen eines Luftstroms, welcher auf die Zellstapelelemente trifft oder auf die Zellstapelelemente gerichtet ist, einwirken oder drücken oder eine Kraft ausüben. Insbesondere kann die Düseneinrichtung auf einen Stapelbereich der Stapeleinrichtung gerichtet sein. Hierdurch kann ein Ablegevorgang und damit das Verfahren beschleunigt werden. Zusätzlich oder alternativ können die in der Stapeleinrichtung aufgenommenen ersten Zellstapelelemente und die zweiten Zellstapelelemente durch eine auf die aufgenommenen ersten und/oder zweiten Zellstapelelemente wirkende Positioniereinrichtung, besonders bevorzugt durch Bewegung der Positioniereinrichtung, besonders bevorzugt durch Vibration der Positioniereinrichtung, ausgerichtet und/oder zentriert werden. Die Positioniereinrichtung kann beispielsweise einen Vibrationsmotor umfassen. Zusätzlich oder alternativ kann die Positioniereinrichtung Positionierbacken aufweisen, zwischen welchen die Zellstapelelemente angeordnet sind und welche gleichzeitig oder paarweise bewegt werden, wodurch die Zellstapelelemente zwischen den Positionierbacken zentriert oder ausgerichtet werden. Der Vibrationsmotor kann mit dem Träger oder mit den Positionierbacken gekoppelt sein. Zusätzlich oder alternativ können die in die Stapeleinrichtung geförderten ersten Zellstapelelemente und/oder zweiten Zellstapelelemente mittels einer, insbesondere getakteten, Führungs- und/oder Gleiteinrichtung eingeführt werden.

Zu der Erfindung gehört auch eine Vorrichtung zum Herstellen einer zumindest ein erstes Zellstapelelement und zumindest ein zweites Zellstapelelement umfassenden Schichtanordnung für einen Zellstapel einer Brennstoffzelle. Die Vorrichtung umfasst eine erste Zellstapelelementsubstratbereitstelleinrichtung zum Bereitstellen eines bahnförmigen ersten Zellstapelelementsubstrats und eine zweite Zellstapelelementbereitstelleinrichtung zum Bereitstellen zweiter Zellstapelelemente. Alternativ kann die Zellstapelelementbereitstelleinrichtung auch dazu eingerichtet sein, ein bahnförmiges zweiten Zellstapelelementsubstrat bereitzustellen. Die erste Zellstapelelementsubstratbereitstelleinrichtung und/oder die zweite Zellstapelelementbereitstelleinrichtung kann beispielsweise ein Lager oder ein Magazin oder einen Speicher oder einen Warenvorrat oder einen Warenbestand, in dem das erste Zellstapelelementsubstrat und/oder die zweiten Zellstapelelemente aufgenommen sind, umfassen. Ferner weist die Vorrichtung eine Beförderungseinrichtung auf, welche dazu eingerichtet ist, das bahnförmige erste Zellstapelelementsubstrat zu befördern. Mit anderen Worten kann mittels der Beförderungseinrichtung das bahnförmige erste Zellstapelelementsubstrat bewegt oder transportiert werden. Des Weiteren umfasst die Vorrichtung eine Trenneinrichtung, welche dazu eingerichtet ist, einzelne erste Zellstapelelemente von dem bahnförmigen ersten Zellstapelelementsubstrat abzutrennen. Mit anderen Worten kann die Trenneinrichtung dazu eingerichtet sein, Teile oder Stücke, welche insbesondere eine vorbestimmte Länge aufweisen, von dem bahnförmigen ersten Zellstapelelementsubstrat abzutrennen oder abzuschneiden. Schließlich weist die Vorrichtung eine Stapeleinrichtung auf, welche dazu eingerichtet ist, die einzelnen abgetrennten ersten Zellstapelelemente und die zweiten Zellstapelelemente zum Bilden der Schichtanordnung aufzunehmen, wobei die einzelnen ersten Zellstapelelemente und die zweiten Zellstapelelemente in der Stapeleinrichtung aufeinandergestapelt sind. Durch die Vorrichtung ergibt sich der Vorteil, dass der Zellstapel für eine Brennstoffzelle besonders schnell, insbesondere durch eine hohe Taktfrequenz, einfach und zuverlässig herstellbar ist. Ferner kann durch die Vorrichtung eine Gefahr einer Beschädigung der Komponenten - der ersten Zellstapelelemente und der zweiten Zellstapelelemente - besonders geringgehalten werden.

Eine vorteilhafte Ausführungsform sieht vor, dass die erste Zellstapelelementsubstratbereitstelleinrichtung und/oder die zweite Zellstapelelementbereitstelleinrichtung eine Abwickeleinrichtung aufweist. Die Abwickeleinrichtung, welche ein Teil eines übergreifenden Bahnlaufsystems darstellt, ist insbesondere dazu eingerichtet, das bahnförmige erste Zellstapelelementsubstrat und/oder ein bahnförmiges zweites Zellstapelelementsubstrat abzuwickeln oder abzurollen. Bevorzugt umfasst die Abwickeleinrichtung zumindest zwei Abwickelrollen, wobei die Abwickelrollen dazu eingerichtet sind, das bahnförmige erste Zellstapelelementsubstrat von einer ersten Rolle oder einer Vorratsrolle oder einer Materialrolle abzuwickeln oder abzurollen. Mit "Abwickelrolle" ist insbesondere ein Maschinenelement gemeint, welches ein Rad oder eine Kreisscheibe umfasst. Die Kreisscheibe oder das Rad weist eine vorbestimmte Reibung auf und ist auf einer Achse gelagert. Die Kreisscheibe oder das Rad dient insbesondere der Führung und dem Abwickeln des ersten und/oder zweiten Zellstapelelementsubstrats. Zusätzlich oder alternativ kann die Abwickeleinrichtung zumindest ein Tänzersystem umfassen, wobei das Tänzersystem dazu eingerichtet ist, beim Abwickeln des bahnförmigen ersten Zellstapelelementsubstrats von einer ersten Rolle eine Zugkraft oder eine Bandgeschwindigkeit zu steuern, wobei das Tänzersystem insbesondere dazu eingerichtet ist, die Zugkraft derart zu steuern, dass das erste Zellstapelelementsubstrat kontinuierlich oder getaktet abrollbar ist. Mit "Tänzersystem" ist insbesondere ein Steuertänzer gemeint, welcher bei einer Abwicklung von Materialien, insbesondere des ersten bahnförmigen Zellstapelelementsubstrats, zur Zugkraftregelung eingesetzt wird. Es handelt sich bevorzugt um ein aktives Tänzersystem. Mit Hilfe des Tänzersystems ist bevorzugt eine Zugkraft, insbesondere eine Linienzugkraft, über einen vorbestimmten Bereich, bevorzugt präzise, einstellbar. Zusätzlich oder alternativ kann die Abwickeleinrichtung eine Bahnkantensteuerung umfassen. Die "Bahnkantensteuerung" kann auch als "Bahnkantenregelung" bezeichnet werden. Zusätzlich oder alternativ kann die Abwickeleinrichtung auch als ein Puffersystem ausgebildet sein. Zur Umsetzung des Puffersystems kann die Abwickeleinrichtung mehrere Abwickelrollen umfassen, welche in einer vorbestimmten Anordnung zueinander angeordnet sind und/oder eine vorbestimmte Abwickellänge des abzuwickelnden Materials, insbesondere des ersten bahnförmigen Zellstapelelementsubstrats oder eines zweiten bahnförmigen Zellstapelelementsubstrats, vorgeben oder bestimmen oder festlegen. Zusätzlich oder alternativ kann es vorgesehen sein, dass die Abwickeleinrichtung zumindest zwei Abwickelrollen und zumindest ein Tänzersystem umfasst, wobei das Tänzersystem zwischen den zumindest zwei Abwickelrollen und/oder in eine Hochrichtung der Vorrichtung über den zumindest zwei Abwickelrollen angeordnet ist. Zusätzlich oder alternativ kann es vorgesehen sein, dass die Abwickeleinrichtung zumindest eine erste Abwickeleinheit zum Abwickeln des bahnförmigen ersten Zellstapelelementsubstrats und/oder zum Abwickeln einer ersten Rollenware als erstes Zellstapelelementsubstrat und/oder zum Abwickeln des auf einer Vorratsrolle oder Materialrolle gewickelten ersten Zellstapelelementsubstrats umfasst. Zusätzlich oder alternativ kann es vorgesehen sein, dass die Abwickeleinrichtung zumindest eine zweite Abwickeleinheit zum Abwickeln zumindest eines zweiten Zellstapelelementsubstrats, welches die zweiten Zellstapelelemente umfasst, und/oder zum Abwickeln eines bahnförmigen zweiten Zellstapelelementsubstrats, welches die zweiten Zellstapelelemente umfasst, und/oder zum Abwickeln einer zweiten Rollenware als zweites Zellstapelelementsubstrat, welches die zweiten Zellstapelelemente umfasst, und/oder zum Abwickeln eines auf einer Vorratsrolle oder einer Materialrolle gewickelten zweiten Zellstapelelementsubstrats, welches die zweiten Zellstapelelemente umfasst, aufweist. Zusätzlich oder alternativ kann es vorgesehen sein, dass die Abwickeleinrichtung zumindest eine erste Abwickeleinheit zum Abwickeln des bahnförmigen ersten Zellstapelelementsubstrats und/oder zumindest eine zweite Abwickeleinheit zum Abwickeln zumindest eines zweiten Zellstapelelementsubstrats, welches die zweiten Zellstapelelemente umfasst, aufweist, wobei die erste Abwickeleinheit und/oder die zweite Abwickeleinheit zumindest zwei Abwickelrollen und/oder zumindest ein Tänzersystem aufweisen. Zusätzlich oder alternativ kann es vorgesehen sein, dass die Abwickeleinrichtung zumindest eine erste Abwickeleinheit zum Abwickeln des ersten Zellstapelelementsubstrats und zumindest eine zweite Abwickeleinheit zum Abwickeln zumindest eines zweiten Zellstapelelementsubstrats, welches die zweiten Zellstapelelemente umfasst, aufweist, wobei die erste Abwickeleinheit und die zweite Abwickeleinheit auf einander gegenüberliegenden Seiten der Stapeleinrichtung oder auf einer Seite der Stapeleinrichtung angeordnet sind. Mit anderen Worten können die erste Abwickeleinheit und die zweite Abwickeleinheit auf der gleichen Seite der Stapeleinrichtung oder jeweils zu beiden Seiten der Stapeleinrichtung angeordnet sein. Durch die Abwickeleinrichtung ergibt sich der Vorteil, dass das entsprechende Zellstapelelementsubstrat besonders einfach und zuverlässig abwickelbar ist. Ferner kann durch die Abwickeleinrichtung eine Möglichkeit geschaffen werden, den Bereitstellungszeitpunkt des entsprechenden Materials einzustellen oder vorzugeben.

Gemäß einer vorteilhaften Weiterbildung ist es vorgesehen, dass die Beförderungseinrichtung zumindest zwei Antriebsrollen umfasst, wobei das bahnförmige erste Zellstapelelementsubstrat zwischen den zumindest zwei Antriebsrollen angeordnet ist, wobei die zumindest zwei Antriebsrollen dazu eingerichtet sind, das bahnförmige erste Zellstapelelementsubstrat zu bewegen. Bevorzugt ist das erste Zellstapelelement zwischen den zumindest zwei Antriebsrollen gehalten oder eingeklemmt. Bevorzugt sind die zumindest zwei Antriebsrollen in eine Hochrichtung der Vorrichtung übereinander angeordnet. Mit "Antriebsrolle" ist insbesondere ein Maschinenelement gemeint, welches ein Rad oder eine Kreisscheibe umfasst. Die Kreisscheibe oder das Rad weist eine vorbestimmte Reibung auf und ist auf einer Achse gelagert. Die Kreisscheibe oder das Rad dient insbesondere der Führung und dem Befördern oder Transportieren des ersten und/oder zweiten Zellstapelelementsubstrats. Zum einen haben die Antriebsrollen den Vorteil, dass hierdurch das erste bahnförmige Zellstapelelementsubstrat besonders sicher gehalten und zum anderen besonders einfach bewegt oder befördert werden kann. Durch die Antriebsrollen weist die Vorrichtung weniger bewegliche Teile, wie Roboterarme, auf, welche das Material bewegen, wodurch die Vorrichtung einem besonders geringen Verschleiß unterliegt. Zusätzlich oder alternativ kann die Beförderungseinrichtung ein Beförderungsband umfassen, wobei die ersten Zellstapelelemente oder die zweiten Zellstapelelemente auf dem Beförderungsband aufliegen. Insbesondere werden die auf dem Beförderungsband aufliegenden oder angeordneten ersten Zellstapelelemente oder zweiten Zellstapelelemente zu der Stapeleinrichtung befördert oder bewegt. Das Beförderungsband kann als eine Endlosschleife ausgebildet sein. Durch eine vorbestimmte Anordnung von Umlenkrollen und/oder Stützrollen kann das Beförderungsband in einer vorbestimmten Anordnung zu der Stapeleinrichtung angeordnet oder platziert werden. Zusätzlich oder alternativ kann die Beförderungseinrichtung zwischen der Abwickeleinrichtung und der Stapeleinrichtung angeordnet sein. Aufeinanderfolgen, insbesondere in eine Haupterstreckungsrichtung der Vorrichtung, welche sich insbesondere senkrecht zu der Hochrichtung der Vorrichtung erstreckt, können die Abwickeleinrichtung, die Beförderungseinrichtung und/oder die Trenneinrichtung und/oder die Stapeleinrichtung angeordnet oder platziert sein. Zusätzlich oder alternativ kann die Beförderungseinrichtung zumindest eine erste Beförderungseinheit zum Befördern des ersten Zellstapelelementsubstrats umfassen, wobei die erste Beförderungseinheit dazu eingerichtet ist, das erste bahnförmige Zellstapelelementsubstrat zu der Trenneinrichtung zu befördern. Zusätzlich oder alternativ kann die Beförderungseinrichtung zumindest eine zweite Beförderungseinheit zum Befördern zumindest eines zweiten Zellstapelelementsubstrats umfassen, wobei die zweite Beförderungseinheit dazu eingerichtet ist, das zweite Zellstapelelementsubstrat zu der Trenneinrichtung zum Abtrennen einzelner zweiter Zellstapelelemente von dem zweiten Zellstapelelementsubstrat zu befördern. Mit Hilfe der entsprechenden Beförderungseinheit können die entsprechenden Zellstapelelementsubstrate besonders einfach und zuverlässig befördert werden. Zusätzlich oder alternativ kann die Beförderungseinrichtung zumindest eine zweite Beförderungseinheit zum Befördern der zweiten Zellstapelelemente zu der Stapeleinrichtung umfassen. Die zweite Beförderungseinheit kann also dazu eingerichtet sein, das Zellstapelelementsubstrat oder einzelne zweite Zellstapelelemente zu transportieren oder zu befördern. Zusätzlich oder alternativ kann die Beförderungseinrichtung zumindest eine erste Beförderungseinheit zum Befördern des ersten Zellstapelelementsubstrats und/oder zumindest eine zweite Beförderungseinheit zum Befördern zumindest eines zweiten Zellstapelelementsubstrats aufweisen, welches die zweiten Zellstapelelemente umfasst, wobei die erste Beförderungseinheit und/oder die zweite Beförderungseinheit zumindest zwei Antriebsrollen umfassen. Zusätzlich oder alternativ kann die Beförderungseinrichtung zumindest eine erste Beförderungseinheit zum Befördern des ersten Zellstapelelementsubstrats und zumindest eine zweite Beförderungseinheit zum Befördern der zweiten Zellstapelelemente aufweisen, wobei die zweite Beförderungseinheit zumindest ein Beförderungsband umfasst, wobei die zweiten Zellstapelelemente auf dem Beförderungsband aufliegen. Beispielsweise kann die erste Beförderungseinheit zum Befördern des ersten bahnförmigen Zellstapelelementsubstrats zwei Antriebsrollen, welche das erste bahnförmige Zellstapelelementsubstrat befördern, und die zweite Beförderungseinheit ein Beförderungsband aufweisen, welches die zweiten Zellstapelelemente befördert. Zusätzlich oder alternativ kann die Beförderungseinrichtung zumindest eine erste Beförderungseinheit zum Befördern des ersten Zellstapelelementsubstrats und zumindest eine zweite Beförderungseinheit zum Befördern zumindest eines zweiten Zellstapelelementsubstrats aufweisen, welches die zweiten Zellstapelelemente umfasst, oder der zweiten Zellstapelelemente umfasst, wobei die erste Beförderungseinheit und die zweite Beförderungseinheit auf einander gegenüberliegenden Seiten der Stapeleinrichtung oder auf einer Seite der Stapeleinrichtung angeordnet sind. Mit anderen Worten können die erste Beförderungseinheit und die zweite Beförderungseinheit auf der gleichen Seite der Stapeleinrichtung oder zu beiden Seiten der Stapeleinrichtung angeordnet sein. Zusätzlich oder alternativ kann die erste Beförderungseinheit der ersten Abwickeleinheit und die zweite Beförderungseinheit der zweiten Abwickeleinheit zugeordnet oder zugewiesen sein.

In vorteilhafter Weise ist die Trenneinrichtung dazu eingerichtet, das bahnförmige erste Zellstapelelementsubstrat zu einem Zellstapelelement und/oder ein zweites Zellstapelelementsubstrat zu einem Zellstapelelement abzutrennen, sobald der abzutrennende Teil des ersten bahnförmigen Zellstapelelementsubstrats und/oder des zweiten Zellstapelelementsubstrats in einem Stapelbereich der Stapeleinrichtung angeordnet ist oder eine vorbestimmte Länge erreicht oder aufweist. Beispielsweise kann die Länge oder der abzutrennende Teil des entsprechenden Zellstapelelementsubstrats durch eine Sensoreinrichtung, wie beispielsweise eine Kamera, welche insbesondere auf den Stapelbereich der Stapeleinrichtung gerichtet ist, erfasst werden. Beispielsweise kann die Beförderungseinrichtung das erste Zellstapelelementsubstrat oder das zweite Zellstapelelementsubstrat in den Stapelbereich der Stapeleinrichtung schieben. Sobald die Sensoreinrichtung das abzutrennende Zellstapelelement oder eine vorbestimmte Länge des Zellstapelelementsubstrats in dem Stapelbereich erfasst, kann die Trenneinrichtung dazu eingerichtet sein, das entsprechende Zellstapelelement von dem entsprechenden Zellstapelelementsubstrat abzutrennen. Zusätzlich oder alternativ kann die Trenneinrichtung eine erste Trenneinheit umfassen, welche dazu eingerichtet ist, die ersten Zellstapelelemente des ersten bahnförmigen Zellstapelelementsubstrats und/oder die zweiten Zellstapelelemente von einem zweiten Zellstapelelementsubstrat abzutrennen, wobei die erste Trenneinheit an einer Zuführung oder einem ersten Zuführbereich der Stapeleinrichtung angeordnet ist. Zusätzlich oder alternativ kann die Trenneinrichtung eine zweite Trenneinheit umfassen, welche dazu eingerichtet ist, die zweiten Zellstapelelemente von einem zweiten Zellstapelelementsubstrat abzutrennen, wobei die zweite Trenneinheit an einer weiteren Zuführung oder einem zweiten Zuführbereich der Stapeleinrichtung angeordnet ist. Die erste Trenneinheit und/oder die zweite Trenneinheit kann auch beabstandet von der Stapeleinrichtung oder separat zu der Stapeleinrichtung angeordnet oder als eigenständige Einrichtung zu der Stapeleinrichtung ausgebildet sein. Zusätzlich oder alternativ kann die Trenneinrichtung zumindest eine erste Trenneinheit zum Abtrennen der ersten Zellstapelelemente von dem ersten Zellstapelelementsubstrat und zumindest eine zweite Trenneinheit zum Abtrennen der zweiten Zellstapelelemente von zumindest einem zweiten Zellstapelelementsubstrat umfassen, wobei die erste Trenneinheit und die zweite Trenneinheit auf einander gegenüberliegenden Seiten der Stapeleinrichtung oder auf einer Seite der Stapeleinrichtung angeordnet sind. Mit anderen Worten können die erste Trenneinheit und die zweite Trenneinheit auf der gleichen Seite der Stapeleinrichtung oder zu beiden Seiten der Stapeleinrichtung angeordnet sein. Zusätzlich oder alternativ kann die erste Trenneinheit der ersten Beförderungseinheit und/oder der ersten Abwickeleinheit und die zweite Trenneinheit der zweiten Beförderungseinheit und/oder der zweiten Abwickeleinheit zugeordnet oder zugewiesen sein. Zusätzlich oder alternativ kann es vorgesehen sein, dass die Trenneinrichtung oder die entsprechende Trenneinheit zumindest einen Laser und/oder zumindest eine Schneideinrichtung und/oder zumindest eine Stanzeinrichtung umfasst.

Eine vorteilhafte Ausführungsform sieht vor, dass die Stapeleinrichtung einen Träger aufweist, wobei die ersten Zellstapelelemente und die zweiten Zellstapelelemente auf dem Träger stapelbar sind, wobei eine Betätigungseinrichtung der Stapeleinrichtung dazu eingerichtet ist, den Träger in eine Hochrichtung der Vorrichtung zu bewegen, insbesondere derart zu bewegen, dass eine Ablageposition, an welcher die Zellstapelelemente in der Stapeleinrichtung abgelegt werden, gleich gehalten wird. Die Betätigungseinrichtung kann beispielsweise einen Motor zum Bewegen des Trägers umfassen. Zusätzlich oder alternativ kann die Stapeleinrichtung zumindest zwei Wandelemente umfassen, welche insbesondere parallel zueinander angeordnet sind, wobei die ersten Zellstapelelemente und die zweiten Zellstapelelemente zwischen den zumindest zwei Wandelementen aufgenommen oder angeordnet sind. Mit anderen Worten können die zumindest zwei Wandelemente in einem vorbestimmten Abstand, insbesondere parallel, zueinander angeordnet sein und zwischen sich die ersten Zellstapelelemente und die zweiten Zellstapelelemente aufnehmen. Zusätzlich oder alternativ kann die Stapeleinrichtung eine Führungs- und/oder Gleiteinrichtung umfassen, welche dazu eingerichtet ist, die in die Stapeleinrichtung geförderten ersten Zellstapelelemente und/oder zweiten Zellstapelelemente einzuführen. Die Führungseinrichtung kann beispielsweise eine, insbesondere bewegliche, Ablage für die ersten und/oder zweiten Zellstapelelemente umfassen, welche insbesondere parallel zu einer Ablagefläche des Trägers und/oder zwischen den zumindest zwei Wandelementen, insbesondere in einem Stapelbereich, angeordnet ist und in eine Hochrichtung der Vorrichtung zum Ablegen der ersten und/oder zweiten Zellstapelelemente verfahrbar ist. Die Gleiteinrichtung kann beispielsweise zumindest zwei Keilelemente umfassen, welche an einer Innenseite der Wandelemente oder Wandung der Stapeleinrichtung, welche dem Stapelbereich zugewandt ist, angeordnet sein können und an welchen die ersten und/oder zweiten Zellstapelelemente in die Stapeleinrichtung oder auf den Träger oder eine Ablagefläche des Trägers gleiten können. Zusätzlich oder alternativ kann die Stapeleinrichtung eine Positioniereinrichtung aufweisen, wobei die Positioniereinrichtung dazu eingerichtet ist, die in der Stapeleinrichtung aufgenommenen ersten Zellstapelelemente und/oder zweiten Zellstapelelemente, insbesondere durch eine Bewegung der Positioniereinrichtung, besonders bevorzugt durch Vibration der Positioniereinrichtung, auszurichten oder in der Stapeleinrichtung zu zentrieren. Die Positioniereinrichtung kann beispielsweise einen Vibrationsmotor umfassen. Zusätzlich oder alternativ kann die Positioniereinrichtung Positionierbacken aufweisen, zwischen welchen die Zellstapelelemente angeordnet sind und welche gleichzeitig oder paarweise oder einzeln bewegt werden können, wodurch die Zellstapelelemente zwischen den Positionierbacken zentriert oder ausgerichtet werden. Der Vibrationsmotor kann mit dem Träger oder mit den Positionierbacken gekoppelt sein. Die Positionierbacken können in dem Stapelbereich oder zwischen den zumindest zwei Wandelementen angeordnet sein. Mit Hilfe der Positioniereinrichtung können die Zellstapelelemente besonders einfach und zuverlässig ausgerichtet werden.

Gemäß einer vorteilhaften Weiterbildung ist es vorgesehen, dass die Vorrichtung eine Sensoreinrichtung umfasst, wobei die Sensoreinrichtung dazu eingerichtet ist, die abzutrennenden ersten Zellstapelelementteile zu erfassen. Zusätzlich oder alternativ kann es vorgesehen sein, dass die Sensoreinrichtung dazu eingerichtet ist, die abzutrennenden zweiten Zellstapelelementteile von einem zweiten Zellstapelelementsubstrat zu erfassen. Die Sensoreinrichtung ist bevorzugt in eine Hochrichtung der Vorrichtung über der Stapeleinrichtung angeordnet und/oder auf einen Stapelbereich der Stapeleinrichtung und/oder einen ersten Zuführbereich und/oder einen zweiten Zuführbereich der Stapeleinrichtung gerichtet. Zusätzlich oder alternativ kann es vorgesehen sein, dass die Sensoreinrichtung eine Kamera und/oder einen Infarot-Sensor umfasst. Mit Hilfe der Sensoreinrichtung können die entsprechenden Zellstapelelemente besonders einfach und zuverlässig erfasst werden.

Eine vorteilhafte Ausführungsform sieht vor, dass die Vorrichtung eine Steuereinrichtung aufweist, welche dazu eingerichtet ist, die Abwickeleinrichtung und/oder die Beförderungseinrichtung und/oder die Trenneinrichtung und/oder die Stapeleinrichtung und/oder die Bereitstelleinrichtungen zum Herstellen der Schichtanordnung für den Zellstapel der Brennstoffzelle anzusteuern. Beispielsweise kann die Steuereinrichtung als ein Steuergerät oder ECU - Electronic Control Unit - ausgebildet sein. Zusätzlich oder alternativ kann die Steuereinrichtung mit einem Computer und/oder der Sensoreinrichtung, insbesondere signaltechnisch und/oder leitungsgebunden und/oder leitungsungebunden, gekoppelt oder verbunden sein. Mit Hilfe der Steuereinrichtung ist der Herstellungsprozess und/oder sind die Einrichtungen der Vorrichtung besonders einfach und zuverlässig steuerbar.

In vorteilhafter Weise ist das bahnförmige erste Zellstapelelementsubstrat als bahnförmiges Material zum Bilden einer Wiederholkomponente des Zellstapels der Brennstoffzelle und/oder als bahnförmiges Membran-Elektrodeneinheit-Material, aus dem durch Vereinzeln Membran-Elektrodeneinheiten als erste Zellstapelelemente bereitstellbar sind, oder als bahnförmiges Bipolarplatten-Material, aus dem durch Vereinzeln Bipolarplatten als erste Zellstapelelemente bereitstellbar sind, und/oder als ein bahnförmiges Folienmaterial ausgebildet, welches die einzelnen ersten Zellstapelelemente bildet, wobei die ersten Zellstapelelemente mit einem Verschnitt vereinzelbar sind, sodass ein Rand der einzelnen Zellstapelelemente mit einer Randverstärkungsfolie ausgebildet ist.

In vorteilhafter Weise ist das zweite Zellstapelelementsubstrat als bahnförmiges zweites Zellstapelelementsubstrat und/oder als bahnförmiges Material zum Bilden einer Wiederholkomponente des Zellstapels der Brennstoffzelle und/oder als bahnförmiges Membran-Elektrodeneinheit-Material, aus dem durch Vereinzeln Membran-Elektrodeneinheiten als zweite Zellstapelelemente bereitstellbar sind, oder als bahnförmiges Bipolarplatten-Material ausgebildet, aus dem durch Vereinzeln Bipolarplatten als zweite Zellstapelelemente bereitstellbar sind, und/oder als ein bahnförmiges Folienmaterial ausgebildet, welches die einzelnen zweiten Zellstapelelemente einfasst, wobei die zweiten Zellstapelelemente mit einem Verschnitt vereinzelbar sind, sodass ein Rand der einzelnen Zellstapelelemente mit einer Randverstärkungsfolie ausgebildet ist. Besonders bevorzugt sind die zweiten Zellstapelelemente als einzelne zweite Zellstapelelemente und/oder als Membran-Elektrodeneinheiten und/oder als Bipolarplatten ausgebildet.

Schließlich gehört zu der Erfindung auch ein Computerprogrammprodukt, umfassend Befehle, die bei der Ausführung eines Programms durch eine Steuereinrichtung der Vorrichtung diese veranlassen das Verfahren auszuführen, wobei die Steuereinrichtung insbesondere dazu eingerichtet ist, die Bereitstelleinrichtungen, die Abwickeleinrichtung und/oder die Beförderungseinrichtung und/oder die Trenneinrichtung und/oder die Stapeleinrichtung zu steuern.

Zu der Erfindung gehören auch Weiterbildungen der erfindungsgemäßen Vorrichtung und des erfindungsgemäßen Computerprogrammprodukts, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Vorrichtung und des erfindungsgemäßen Computerprogrammprodukts hier nicht noch einmal beschrieben.

Ein Ausführungsbeispiel wird im Folgenden anhand der beigefügten Zeichnungen näher erläutert. Darin zeigt:
- Fig. 1: eine schematische Darstellung einer Vorrichtung zum Herstellen einer zumindest ein erstes Zellstapelelement und zumindest ein zweites Zellstapelelement umfassenden Schichtanordnung für einen Zellstapel einer Brennstoffzelle umfassend eine erste Abwickeleinheit, ein erstes Tänzersystem, eine erste Beförderungseinheit und eine zweite Beförderungseinheit, eine erste Trenneinheit und eine Stapeleinrichtung mit einer Zuführung der ersten Zellstapelelemente und der zweiten Zellstapelelemente von gegenüberliegenden Seiten in die Stapeleinrichtung;
- Fig. 2: eine schematische Darstellung einer alternativen Vorrichtung zum Herstellen einer zumindest ein erstes Zellstapelelement und zumindest ein zweites Zellstapelelement umfassenden Schichtanordnung für einen Zellstapel einer Brennstoffzelle umfassend eine erste Abwickeleinheit, ein erstes Tänzersystem, eine erste Beförderungseinheit und eine zweite Beförderungseinheit, eine erste Trenneinheit und eine Stapeleinrichtung mit einer Zuführung der ersten Zellstapelelemente und der zweiten Zellstapelelemente von einer oder der gleichen Seite in die Stapeleinrichtung;

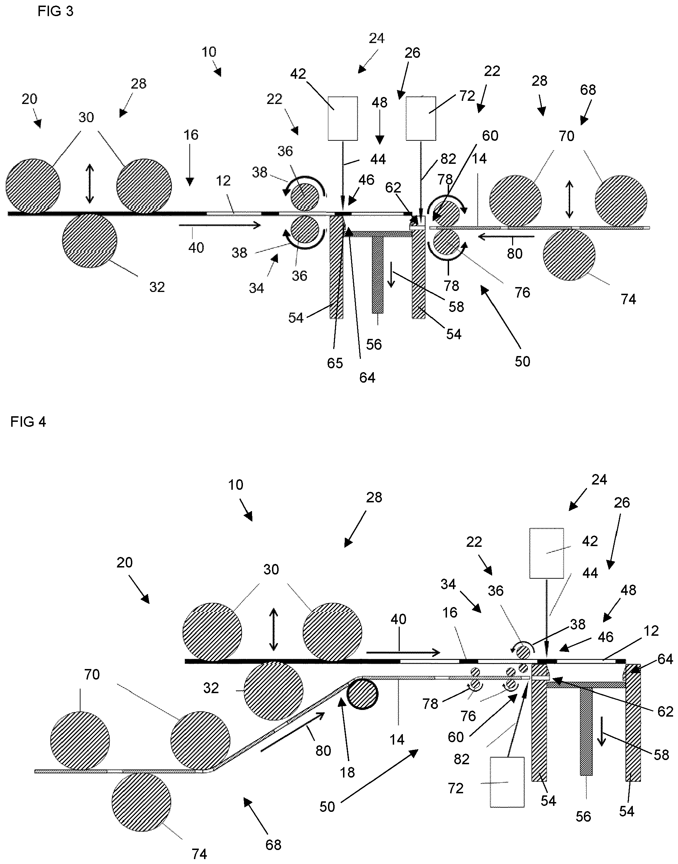

- Fig. 3: eine schematische Darstellung einer alternativen Vorrichtung zum Herstellen einer zumindest ein erstes Zellstapelelement und zumindest ein zweites Zellstapelelement umfassenden Schichtanordnung für einen Zellstapel einer Brennstoffzelle umfassend eine erste Abwickeleinheit, ein erstes Tänzersystem, eine zweite Abwickeleinheit, ein zweites Tänzersystem, eine erste Beförderungseinheit und eine zweite Beförderungseinheit, eine erste Trenneinheit und eine zweite Trenneinheit und eine Stapeleinrichtung mit einer Zuführung der ersten Zellstapelelemente und der zweiten Zellstapelelemente von gegenüberliegenden Seiten in die Stapeleinrichtung;
- Fig. 4: eine schematische Darstellung einer alternativen Vorrichtung zum Herstellen einer zumindest ein erstes Zellstapelelement und zumindest ein zweites Zellstapelelement umfassenden Schichtanordnung für einen Zellstapel einer Brennstoffzelle umfassend eine erste Abwickeleinheit, ein erstes Tänzersystem, eine zweite Abwickeleinheit, ein zweites Tänzersystem, eine erste Beförderungseinheit und eine zweite Beförderungseinheit, eine erste Trenneinheit und eine zweite Trenneinheit und eine Stapeleinrichtung mit einer Zuführung der ersten Zellstapelelemente und der zweiten Zellstapelelemente von einer oder der gleichen Seite in die Stapeleinrichtung;
- Fig. 5: eine schematische Darstellung eines Stapelvorgangs der ersten Zellstapelelemente und der zweiten Zellstapelelemente mit der Vorrichtung von Fig. 1;
- Fig. 6: eine schematische Darstellung eines Stapelvorgangs der ersten Zellstapelelemente und der zweiten Zellstapelelemente mit der Vorrichtung von Fig. 1;
- Fig. 7: eine schematische Darstellung eines Stapelvorgangs der ersten Zellstapelelemente und der zweiten Zellstapelelemente mit der Vorrichtung von Fig. 1;
- Fig. 8: eine schematische Darstellung der Vorrichtung von Fig. 1 mit einer alternativen Auslenkung des ersten Tänzersystems;
- Fig. 9: eine schematische Darstellung der Vorrichtung von Fig. 1 mit einer Düseneinrichtung zum Unterstützen eines Einlegevorgangs der ersten Zellstapelelemente und/oder der zweiten Zellstapelelemente in die Stapeleinrichtung;
- Fig. 10: eine schematische Darstellung eines Stapelvorgangs der ersten Zellstapelelemente und der zweiten Zellstapelelemente mit der Vorrichtung von Fig. 3;
- Fig. 11: eine schematische Darstellung eines Stapelvorgangs der ersten Zellstapelelemente und der zweiten Zellstapelelemente mit der Vorrichtung von Fig. 3;
- Fig. 12: eine schematische Darstellung eines Stapelvorgangs der ersten Zellstapelelemente und der zweiten Zellstapelelemente mit der Vorrichtung von Fig. 3;
- Fig. 13: eine schematische Darstellung der Vorrichtung von Fig. 3 mit einer alternativen Anordnung des ersten und zweiten Tänzersystems; und
- Fig. 14: eine schematische Darstellung der Vorrichtung von Fig. 3 mit einer Düseneinrichtung zum Unterstützen des Einlegevorgangs der ersten Zellstapelelemente und/oder der zweiten Zellstapelelemente in die Stapeleinrichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind gleiche oder funktionsgleiche Elemente oder Einrichtungen oder Vorrichtungen mit denselben Bezugszeichen versehen.

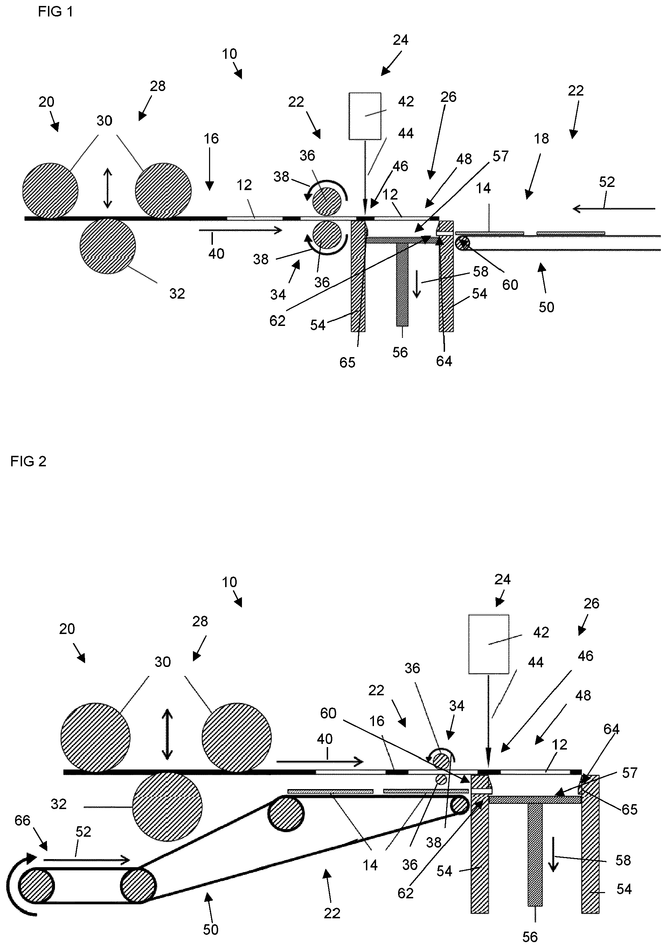

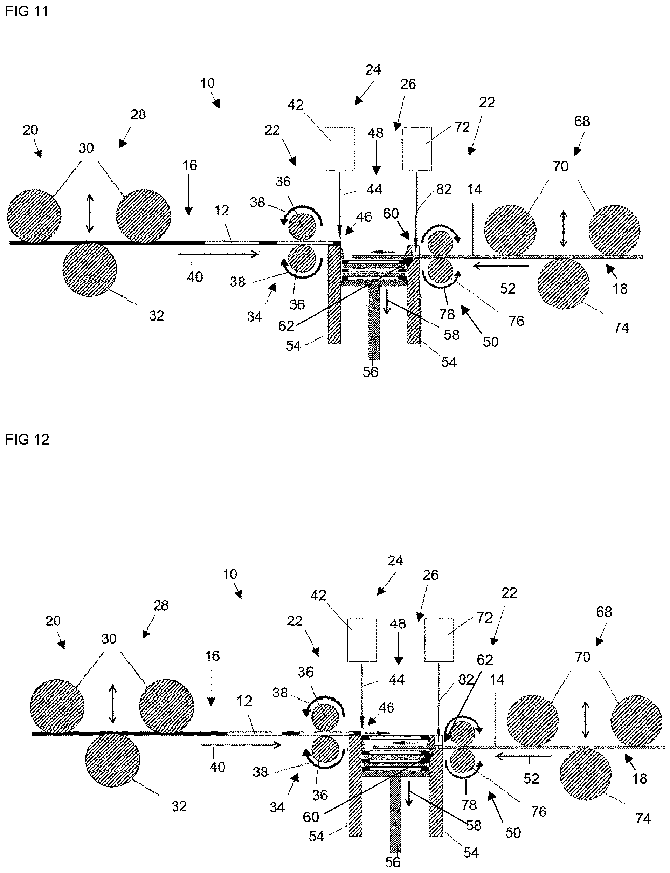

Fig. 1 zeigt in einer schematischen Darstellung eine Vorrichtung 10 zum Herstellen eines Zellstapels einer Brennstoffzelle. Der mit der Vorrichtung 10 herzustellende Zellstapel umfasst zwei verschiedene Wiederholkomponenten. Die Wiederholkomponenten können auch als Zellstapelelemente des herzustellenden Zellstapels bezeichnet werden. Hierbei umfassen die Zellstapelelemente Bipolarplatten und Membran-Elektroden-Einheiten. Die Zellstapelelemente umfassen erste Zellstapelelemente 12 und zweite Zellstapelelemente 14. Beispielsweise können die ersten Zellstapelelemente Bipolarplatten und die zweiten Zellstapelelemente 14 Membran-Elektroden-Einheiten oder umgekehrt also die ersten Zellstapelelemente 12 Membran-Elektroden-Einheiten und die zweiten Zellstapelelemente 14 Bipolarplatten umfassen. Bei dem herzustellenden Zellstapel sind die ersten Zellstapelelemente 12 und die zweiten Zellstapelelemente 14 abwechselnd aufeinandergeschichtet oder aufeinandergestapelt. Die ersten Zellstapelelemente 12 können als einzelne erste Zellstapelelemente 12 oder als ein erstes Zellstapelelementsubstrat, aus dem durch Vereinzeln oder Abtrennen die ersten Zellstapelelemente 12 gebildet werden, bereitgestellt werden. Das erste Zellstapelelementsubstrat 16 kann als Rollenware oder auf einer Vorratsrolle oder als eine Materialrolle bereitgestellt werden. Die zweiten Zellstapelelemente 14 können als einzelne zweite Zellstapelelemente 14 oder als ein zweites Zellstapelelementsubstrat 18, aus dem durch Vereinzeln oder Abtrennen die zweiten Zellstapelelemente 14 gebildet werden, bereitgestellt werden. Das zweite Zellstapelelementsubstrat 18 kann als Rollenware oder auf einer Vorratsrolle oder als eine Materialrolle bereitgestellt werden. Das erste Zellstapelelementsubstrat 16 umfasst die ersten Zellstapelelemente 12 und das zweite Zellstapelelementsubstrat 18 umfasst die zweiten Zellstapelelemente 14. In den Figuren Fig. 1, Fig. 2 und Fig. 5 bis Fig. 9 wird das erste Zellstapelelementsubstrat 16 als Rollenware und das zweite Zellstapelelementsubstrat 18 als einzelne oder vereinzelte zweite Zellstapelelemente 14, insbesondere als Eingangsmaterial, bereitgestellt. Alternativ könnte in den Figuren Fig. 1, Fig. 2 und Fig. 5 bis Fig. 9 das erste Zellstapelelementsubstrat 16 als einzelne oder vereinzelte erste Zellstapelelemente 12 und das zweite Zellstapelelementsubstrat 18 als Rollenware, insbesondere als Eingangsmaterial, bereitgestellt werden. In den Figuren Fig. 3, Fig. 4 und Fig. 10 bis Fig. 14 wird das erste Zellstapelelementsubstrat 16 als Rollenware und das zweite Zellstapelelementsubstrat 18 ebenfalls als Rollenware, insbesondere als Eingangsmaterial, bereitgestellt. Das erste Zellstapelelementsubstrat 16 kann durch eine erste Zellstapelelementsubstratbereitstelleinrichtung bereitgestellt werden. Das zweite Zellstapelelementsubstrat 18 und/oder die zweiten Zellstapelelemente 14 können durch eine zweite Zellstapelelementsubstratbereitstelleinrichtung und/oder eine Zellstapelelementbereitstelleinrichtung bereitgestellt werden.

Die Vorrichtung 10 zum Herstellen des Zellstapels umfasst eine Abwickeleinrichtung 20, eine Beförderungseinrichtung 22, eine Trenneinrichtung 24 und eine Stapeleinrichtung 26. Beispielsweise kann die erste Zellstapelelementsubstratbereitstelleinrichtung und/oder die zweite Zellstapelelementsubstratbereitstelleinrichtung und/oder die zweite Zellstapelelementbereitstelleinrichtung die Abwickeleinrichtung 20 umfassen.

Gemäß den Ausführungsformen von Fig. 1, Fig. 2 und Fig. 5 bis Fig. 9 umfasst die Abwickeleinrichtung 20 eine erste Abwickeleinheit 28. Die erste Abwickeleinheit 28 weist zwei Abwickelrollen 30 und ein erstes Tänzersystem 32 auf. Die Abwickelrollen 30 sind in eine Haupterstreckungsrichtung der Vorrichtung 10 in einem vorbestimmten Abstand zueinander angeordnet. Zwischen den Abwickelrollen 30 ist das Tänzersystem 32 angeordnet. Dabei sind in eine Hochrichtung der Vorrichtung 10, welche sich insbesondere senkrecht zur Haupterstreckungsrichtung der Vorrichtung 10 erstreckt, dass erste Tänzersystem 32 und die Abwickelrollen 30 übereinander angeordnet. Das erste Zellstapelelementsubstrat 16 ist zwischen den Abwickelrollen 30 und dem Tänzersystem 32 angeordnet oder gehalten oder eingeklemmt. Aufeinanderfolgend liegt das erste Zellstapelelementsubstrat 16 an einer ersten Rolle der Abwickelrollen 30, an dem ersten Tänzersystem 32 und an einer zweiten Rolle der Abwickelrollen 30 an. Das erste Tänzersystem 32 kann in die Hochrichtung der Vorrichtung 10, wie durch den Pfeil zwischen den Abwickelrollen 30 verdeutlicht, bewegt, also insbesondere nach oben oder unten versetzt werden. Die erste Abwickeleinheit 28 ist dazu eingerichtet, das erste Zellstapelelementsubstrat 16, welches als erste Rollenware ausgebildet ist oder auf einer Vorratsrolle oder Materialrolle aufgewickelt ist, abzuwickeln. Mithilfe des ersten Tänzersystems 32 kann eine Bandgeschwindigkeit beim Abwickeln eingestellt werden. Das abgewickelte erste Zellstapelelementsubstrat 16 wird durch die anschließende Beförderungseinrichtung 22 befördert oder transportiert. Dabei ist die Beförderungseinrichtung 22 dazu eingerichtet, das abgewickelte erste Zellstapelelementsubstrat 16, insbesondere von der ersten Abwickeleinheit 28, zu der Trenneinrichtung 24 und/oder der Stapeleinrichtung 26 zu befördern. Die Beförderungseinrichtung 22 umfasst eine erste Beförderungseinheit 34. Die erste Beförderungseinheit 34 ist der ersten Abwickeleinheit 30 nachgeschaltet. In die Haupterstreckungsrichtung der Vorrichtung 10 ist die erste Beförderungseinheit 34 neben der ersten Abwickeleinheit 30 angeordnet. Dabei ist die erste Beförderungseinheit 34 zwischen der ersten Abwickeleinheit 30 und der Stapeleinrichtung 26 und/oder Trenneinrichtung 24 angeordnet. Die erste Beförderungseinheit 34 umfasst zwei Antriebsrollen 36, welche auch als Beförderungs- oder Transportrollen bezeichnet werden können. Die Antriebsrollen 36 sind in die Hochrichtung der Vorrichtung 10 übereinander angeordnet. Dabei ist das durch die erste Abwickeleinheit 30 abgewickelte erste Zellstapelelementsubstrat 16 zwischen den Antriebsrollen 36 angeordnet. Die Antriebsrollen 36 drehen sich in entgegengesetzte Richtungen. Dabei dreht sich eine der Beförderungsrollen 36 im Uhrzeigersinn und die andere der Beförderungsrollen gegen den Uhrzeigersinn. Die Drehrichtung der Antriebsrollen 36 ist durch die Pfeile 38 verdeutlicht. Durch die erste Beförderungseinheit 34 wird das erste Zellstapelelementsubstrat 16 in eine Vorschubrichtung bewegt. Die Vorschubrichtung ist durch den Pfeil 40 verdeutlicht. Die Trenneinrichtung 24 umfasst eine erste Trenneinheit 42. Die Beförderungseinrichtung 22 oder die erste Beförderungseinheit 34 ist dazu eingerichtet, das erste Zellstapelelementsubstrat 16 zu der Trenneinrichtung 24 oder der ersten Trenneinheit 42 zu befördern. Die erste Trenneinheit 42 kann als Laser oder Schneideinrichtung oder Stanzeinrichtung ausgebildet sein. Bei den in den Figuren gezeigten ersten Trenneinheit 42 ist diese als ein Laser ausgebildet. Mithilfe eines Laserstrahls 44 trennt die erste Trenneinheit 42 die ersten Zellstapelelemente 12 von dem ersten Zellstapelelementsubstrat 16 ab. Die erste Trenneinheit 42 ist also dazu eingerichtet, von dem ersten Zellstapelelementsubstrat 16 die ersten Zellstapelelemente 12 abzutrennen. Hierzu ist der Laserstrahl 44 auf das Zellstapelelementsubstrat 16 gerichtet. Die erste Trenneinheit 42 ist dabei an einem ersten Zuführbereich 46 oder einer Zuführung der Stapeleinrichtung 26 angeordnet. Die erste Trenneinheit 42 ist dazu eingerichtet, Teile oder Stücke von dem ersten Zellstapelelementsubstrat 16 abzutrennen, sobald diese eine vorbestimmte Länge erreicht haben oder in einem Stapelbereich 48 der Stapeleinrichtung 26 angeordnet sind. Die erste Trenneinheit 42 ist dabei in die Hochrichtung der Vorrichtung 10 über der Stapeleinrichtung 26 angeordnet.

Gemäß den Ausführungsformen von Fig. 1, Fig. 2 und Fig. 5 bis Fig. 9 umfasst die Beförderungseinrichtung 22 eine zweite Beförderungseinheit 50. In den Figuren Fig. 1, Fig. 2 und Fig. 5 bis Fig. 9 ist die zweite Beförderungseinheit 50 als ein Beförderungsband ausgebildet. Die zweite Beförderungseinheit 50 ist dazu eingerichtet, die zweiten Zellstapelelemente 14 zu der Stapeleinrichtung 26 zu befördern oder zu bewegen oder zu transportieren. Dabei liegen einzelne zweite Zellstapelelemente 14 auf dem Beförderungsband auf. Das Beförderungsband kann wie in Fig. 2 gezeigt als eine Endlosschleife ausgebildet sein. Mit Hilfe von Umlenkrollen und/oder Stützrollen und/oder Transportrollen kann das Beförderungsband in einer vorbestimmten Anordnung, insbesondere angepasst an die erste Abwickeleinheit 28 und/oder erste Beförderungseinheit 34 und/oder Stapeleinrichtung, angeordnet werden. In Figur Fig. 2 weist das Beförderungsband eine stufenförmige Form auf. Dabei liegt der Ablagebereich 66 in die Hochrichtung der Vorrichtung 10 unter dem zweiten Zuführbereich 60. Von dem Ablagebereich 66 zu dem Zuführbereich 60 weist das Beförderungsband insbesondere eine Steigung auf. Die zweite Beförderungseinheit 50 bewegt die zweiten Zellstapelelemente 14 in die zweite Vorschubrichtung. Die zweite Vorschubrichtung ist durch den Pfeil 52 gekennzeichnet. In den Figuren Fig. 1 und Fig. 5 bis Fig. 9 sind die erste Beförderungseinheit 34 und die zweite Beförderungseinheit 50 auf gegenüberliegenden Seiten der Stapeleinrichtung 26 angeordnet. Die erste Abwickeleinheit 28 und/oder die erste Trenneinheit 42 ist dabei auf der gleichen Seite wie die erste Beförderungseinheit 34 angeordnet. Die zweite Beförderungseinheit 50 ist auf der gegenüberliegenden Seite der Stapeleinrichtung 26 zu der ersten Abwickeleinheit 28 und/oder der ersten Beförderungseinheit 22 und/oder der ersten Trenneinheit 42 angeordnet.

Die Stapeleinrichtung 26 umfasst zwei Wandelemente 54, welche in einem vorbestimmten Abstand parallel zueinander angeordnet sind. Zwischen den Wandelementen 54 ist ein Träger 56 angeordnet. Die in die Stapeleinrichtung 26 eingeführten Zellstapelelemente - erste Zellstapelelemente 12 und zweite Zellstapelelemente 14 - werden auf dem Träger 56 aufgelegt oder darauf gestapelt. Der Träger 56 ist in die Hochrichtung der Vorrichtung 10 zwischen den Wandelementen 54 bewegbar oder verfahrbar. Die Bewegung des Trägers 56 ist durch den Pfeil 58 verdeutlicht. Der Träger 56 dient als Ablage für die Zellstapelelemente 12, 14. Hierzu weist der Träger 56 eine Ablagefläche 57 auf, auf welcher die Zellstapelelemente 12, 14 abgelegt und/oder gestapelt werden. Damit eine Ablageposition für die Zellstapelelemente 12, 14 gleich gehalten werden kann, wird der Träger 56 in die Hochrichtung, insbesondere von dem ersten Zuführbereich 46 weg, der Vorrichtung 10 bewegt oder verfahren. Damit der Träger 56 bewegt werden kann, weist die Vorrichtung 10 ferner eine Bewegungseinrichtung (in Figuren nicht dargestellt) auf. Die Bewegungseinrichtung ist dazu eingerichtet, den Träger 56 in die Hochrichtung der Vorrichtung 10, insbesondere auf und ab, zu bewegen.

Damit die abgetrennten ersten Zellstapelelemente 12 und die zweiten Zellstapelelemente 14 abwechselnd auf dem Träger 56 übereinander geschichtet oder gestapelt werden können, werden die ersten Zellstapelelemente 12 und die zweiten Zellstapelelemente 14 an unterschiedlichen Stellen der Stapeleinrichtung 26 zugeführt. Dabei werden die ersten Zellstapelelemente 12 in die Hochrichtung der Vorrichtung 10 über den zweiten Zellstapelelemente 14 der Stapeleinrichtung 26 zugeführt. Die Stapeleinrichtung 26 weist entsprechend zwei Einführ- oder Zuführbereiche 46, 60 auf. Die ersten Zellstapelelemente 12 werden über den ersten Zuführbereich 46 und die zweiten Zellstapelelemente 14 über den zweiten Zuführbereich 60 der Stapeleinrichtung 26 zugeführt oder in die Stapeleinrichtung oder den Stapelbereich 48 eingeführt. In den Figuren Fig. 1 und Fig. 5 bis Fig. 9 sind die Zuführbereiche 46, 60 auf gegenüberliegenden Seiten der Stapeleinrichtung 26 angeordnet. Dabei werden die ersten Zellstapelelemente 12 über eines der Wandelemente über den ersten Zuführbereich 46 und die zweiten Zellstapelelemente 14 über das gegenüberliegende Wandelement über oder durch den zweiten Zuführbereich 60 in die Stapeleinrichtung 26 eingeführt. Der zweite Zuführbereich 60 weist eine Öffnung 62 auf. Der erste Zuführbereich 48 ist dabei in die Hochrichtung der Vorrichtung 10 über dem zweiten Zuführbereich 60 angeordnet. Die Öffnung 62 ist an einem der Wandelemente 54, welches insbesondere der zweiten Beförderungseinheit 50 zugewiesen oder zugeordnet ist, angeordnet. Die Öffnung 62 durchdringt das Wandelement 54, insbesondere in die Haupterstreckungsrichtung der Vorrichtung 10. Die zweiten Zellstapelelemente 14 werden durch die Öffnung 62 in den Stapelbereich 48 geschoben. Ferner weist die Stapeleinrichtung 26 eine Gleiteinrichtung 64 auf, welche dazu eingerichtet ist, die Zellstapelelemente 12, 14, insbesondere die abgetrennten ersten Zellstapelelemente 12, in den Stapelbereich 48 zu fördern oder zu führen. Dabei weist die Gleiteinrichtung 64, insbesondere zwei, Gleitelemente 65 an einer Innenseite oder Innenfläche, welche dem Stapelbereich 48 zugewandt ist, an den Wandelementen 54 auf, insbesondere im Bereich des ersten Zuführbereichs 46 oder des zweiten Zuführbereichs 60 oder an einem Einlass des Stapelbereichs 48. Die Gleitelemente 65 weisen jeweils eine keilförmige Form auf. Durch deren Anordnung an der Innenseite der Wandelemente 54 weisen die Gleitelemente 65 zusammen eine trichterförmige Form auf.

Im Folgenden wird der Einlegevorgang oder Stapelvorgang der Zellstapelelemente 12, 14 oder die Herstellung des Zellstapels mithilfe der Vorrichtung 10 in Bezug auf Fig. 1 und Fig. 5 bis Fig. 9 genauer beschrieben:
Bei dieser Stapelvariante wird im Ausgangszustand das erste Zellstapelelementsubstrat 16 als Rollenware zugeführt und das zweite Zellstapelelementsubstrat 18 als vereinzelte Einheiten oder zweite Zellstapelelemente 14 über eine Bandzuführung in die Vorrichtung 10 oder Anlage eingebracht. Hierbei wird über eine Abwickeleinrichtung 20, also die erste Abwickeleinheit 28, welche eine Bahnkantensteuerung und das erste Tänzersystem 32 umfasst, ein Abrollen des ersten Zellstapelelementsubstrats 16 realisiert oder umgesetzt. Das erste Tänzersystem 32 ermöglicht einen Übergang zwischen einem stetig laufendem Abwickelsystem, also einer stetig laufenden ersten Abwickeleinheit 28, und/oder einem getakteten Trennprozess mittels der ersten Trenneinheit 42. Nachdem mit Hilfe der Antriebsrollen 36, also der Antriebsrollen 36 der ersten Beförderungseinheit 34 ein erstes Zellstapelelement 12 des ersten Zellstapelelementsubstrats 16 aus der Vorratsrolle an die Ablageposition, also den Stapelbereich 48, insbesondere mithilfe der ersten Beförderungseinheit 34 transportiert wurde, erfolgt die Abtrennung durch die erste Trenneinheit 42. Um keinen Verschnitt von dem Zellstapelelemente-Material zu erzeugen, wird die Rollenware des ersten Zellstapelelementsubstrats 16 dem Trennprozess durch Einschieben zugeführt. Anschließend werden die vereinzelten ersten Zellstapelelemente 12 mithilfe ihrer Gewichtskraft direkt in die Stapeleinrichtung 26, insbesondere auf dem Träger 56 oder der Ablagefläche 57 des Trägers 56, eingelegt oder abgelegt. Um eine korrekte Sequenz aus aufeinanderfolgenden ersten Zellstapelelementen 12 und zweiten Zellstapelelementen 14 zu erzeugen, wird durch seitliches Einschieben in die Stapeleinrichtung 26 ein bereits vereinzeltes zweites Zellstapelelement 14 über die Bandzuführung in die Stapeleinrichtung 26 eingebracht. Ferner kann die Vorrichtung 10 eine Führungs- oder Positionierungseinrichtung (in Figuren nicht gezeigt) aufweisen, welche dazu eingerichtet ist, die Zellstapelelemente 12, 14 in der Stapeleinrichtung 26 auszurichten und/oder zu zentrieren. Nach dem Ablegen jeder einzelnen Zellstapelkomponente 12, 14 erfolgt über den Träger 56, welcher in die Hochrichtung der Vorrichtung 10 bewegt wird, ein Höhenausgleich, zum einen um die Ablageposition auf konstanter Position zu halten und zum anderen um die Fallstrecke des jeweiligen Zellstapelelements 12, 14 nicht zu verändern. Dieser Ablauf wiederholt sich so lange, bis die geforderte Anzahl an Zellstapelelementen 12, 14 in der Stapeleinrichtung 26 eingebracht ist.

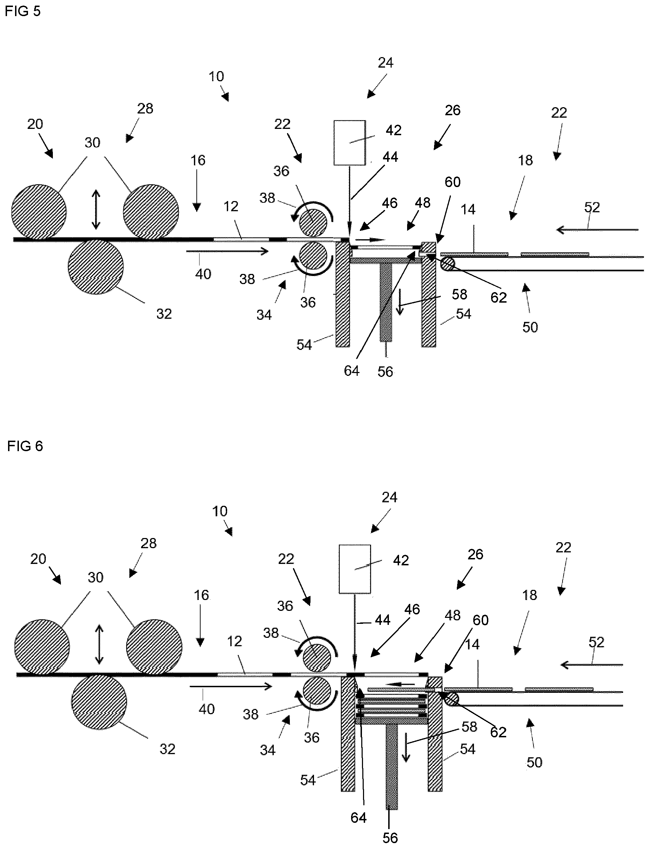

Anstelle, dass die Zuführung in die Stapeleinrichtung 26 von beiden Seiten der Stapeleinrichtung erfolgt, wie es in Fig. 1 gezeigt ist, können die Zellstapelelemente 12, 14 von einer Seite der Stapeleinrichtung 26 der Stapeleinrichtung 26 zugeführt werden, wie aus Fig. 2 ersichtlich. Wie in Fig. 2 gezeigt, sind die zweite Beförderungseinheit 50 und die auf der zweiten Beförderungseinheit 50 aufliegenden zweiten Zellstapelelemente 14 auf der gleichen Seite angeordnet, wie die erste Abwickeleinheit 28 und/oder die erste Beförderungseinheit 34 und/oder die erste Trenneinheit 42. Dabei weist das Wandelement 54, welches der ersten Beförderungseinheit 22 und/oder der zweiten Beförderungseinheit 50 zugewandt ist, die Öffnung 62 auf, über welche die zweiten Zellstapelelement 14 in den Stapelbereich 48 oder in die Stapeleinrichtung 26 befördert oder gefördert oder durchgeschoben oder eingeführt werden. Die zweite Beförderungseinheit 50 ist in eine Hochrichtung der Vorrichtung 10 unter der ersten Beförderungseinheit 34 und/oder der ersten Abwickeleinheit 28 angeordnet. Die zweite Beförderungseinheit 50 weist einen Ablagebereich 66 auf, auf dem die zweiten Zellstapelelement 14, insbesondere zeitlich, nacheinander abgelegt werden, um durch die zweite Beförderungseinheit 50 zu der Stapeleinrichtung 26 befördert oder transportiert zu werden. Der Stapelvorgang erfolgt dabei analog wie er bereits im Zusammenhang mit Fig. 1 und den Figuren Fig. 5 bis Fig. 7 beschrieben worden ist.

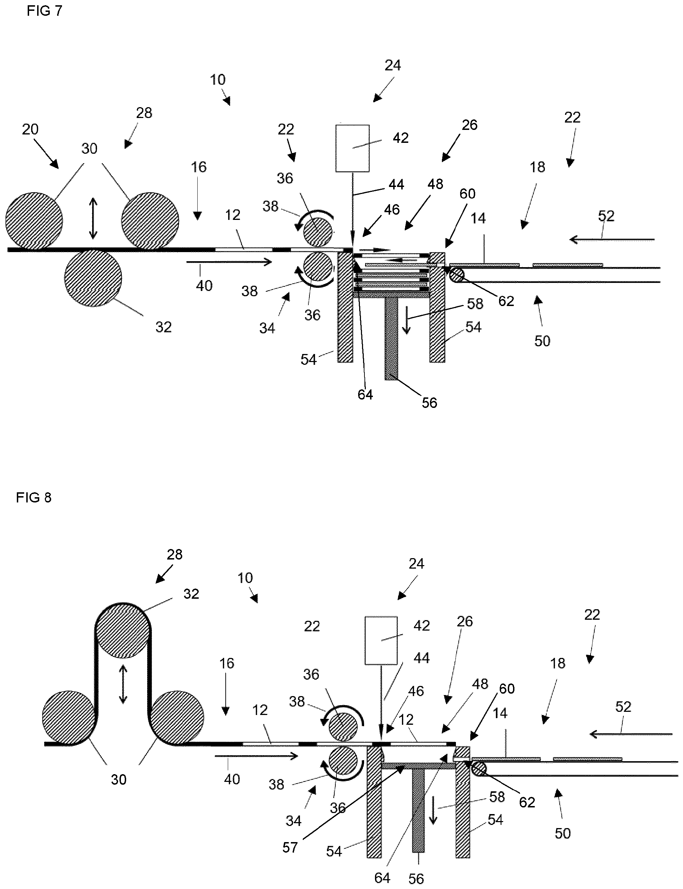

Fig. 8 zeigt die Vorrichtung 10 von Fig. 1 mit einer alternativen Anordnung des ersten Tänzersystems 32. Dabei ist das Tänzersystem 32 in die Hochrichtung der Vorrichtung 10 über den Abwickelrollen 30 der ersten Abwickeleinheit 28 angeordnet. Ferner ist das erste Tänzersystem 32 in die Haupterstreckungsrichtung der Vorrichtung 10 weiterhin zwischen den beiden Abwickelrollen 30 jedoch versetzt in die Hochrichtung der Vorrichtung 10 zu den Abwickelrollen 30 angeordnet. Das erste Zellstapelelementsubstrat 16 ist aufeinanderfolgend um eine erste Abwickelrolle, das erste Tänzersystem 32 und die zweite Abwickelrolle der Abwickelrollen 30 gelegt. Das erste Zellstapelelementsubstrat 16 ist in einer Schlaufe um das Tänzersystem 32 gelegt oder gewickelt. Hierdurch übernimmt das Tänzersystem 32 die Funktion eines Puffersystems zur Überbrückung der "Rüstzeit" zwischen dem Abschluss der Stack-Assemblierung und dem Beginn des Stapelprozesses. Somit können die Abwickeleinheiten 28, 68, insbesondere permanent, mit gleichbleibender Bandgeschwindigkeit betrieben werden.

In den Figuren Fig. 3, Fig. 4 und Fig. 10 bis Fig. 14 sind die erste Abwickeleinheit 28, die erste Beförderungseinheit 24 und die erste Trenneinheit 42 analog zu der in der Fig. 1 beschriebenen Vorrichtung angeordnet, aufgebaut und ausgebildet. Im Unterschied hierzu wird der Vorrichtung 10 in den Figuren Fig. 3, Fig. 4 und Fig. 10 bis Fig. 14 das zweite Zellstapelelementsubstrat 18 als Rollenware oder Vorratsrolle bereitgestellt oder der Vorrichtung 10 zugeführt. Das zweite Zellstapelelementsubstrat 18 wird wie das erste Zellstapelelementsubstrat 16 als Rollenware bereitgestellt. In den Figuren Fig. 3, Fig. 4 und Fig. 10 bis Fig. 14 weist die Vorrichtung 10 die Abwickeleinrichtung 20 eine zweite Abwickeleinheit 68, die Beförderungseinrichtungen 22 die zweite Beförderungseinheit 50 und die Trenneinrichtung 24 eine zweite Trenneinheit 72 auf.

Die zweite Abwickeleinheit 68 weist zwei Abwickelrollen 70 und ein zweites Tänzersystem 74 auf. Die Abwickelrollen 70 der zweiten Abwickeleinheit 68 sind in die Haupterstreckungsrichtung der Vorrichtung 10 in einem vorbestimmten Abstand zueinander angeordnet. Zwischen den Abwickelrollen 70 ist das zweite Tänzersystem 74 angeordnet. Dabei sind in eine Hochrichtung der Vorrichtung 10, welche sich insbesondere senkrecht zur Haupterstreckungsrichtung der Vorrichtung 10 erstreckt, dass zweite Tänzersystem 74 und die Abwickelrollen 70 übereinander angeordnet. Das zweite Zellstapelelementsubstrat 18 ist zwischen den Abwickelrollen 70 und dem Tänzersystem 74 angeordnet oder gehalten oder eingeklemmt. Die zweite Abwickeleinheit 68 ist dazu eingerichtet, dass zweite Zellstapelelementsubstrat 18, welches als zweite Rollenware ausgebildet ist oder auf einer Vorratsrolle oder Materialrolle aufgewickelt ist, abzuwickeln. Mithilfe des zweiten Tänzersystems 74 kann eine Bandgeschwindigkeit beim Abwickeln eingestellt werden. Das zweite Tänzersystem 74 kann in die Hochrichtung der Vorrichtung 10, wie durch den Pfeil zwischen den Abwickelrollen 70 verdeutlicht, bewegt werden, also insbesondere nach oben oder unten versetzt werden. Das abgewickelte zweite Zellstapelelementsubstrat 18 wird durch die Beförderungseinrichtung 22 befördert oder transportiert. Dabei ist die Beförderungseinrichtung 22 dazu eingerichtet, dass abgewickelte zweite Zellstapelelementsubstrat 18 zu der Trenneinrichtung 24 und/oder der Stapeleinrichtung 26 zu befördern. Die Beförderungseinrichtung 22 umfasst die zweite Beförderungseinheit 50. Die zweite Beförderungseinheit 50 ist der zweiten Abwickeleinheit 68 nachgeschaltet.

In die Haupterstreckungsrichtung der Vorrichtung 10 ist die zweite Beförderungseinheit 50 neben der zweiten Abwickeleinheit 68 angeordnet. Dabei ist die zweite Beförderungseinheit 50 zwischen der zweiten Abwickeleinheit 68 und der Stapeleinrichtung 26 und/oder Trenneinrichtung 24 angeordnet. Im Gegensatz zu der Ausführungsform in den Figuren Fig. 1, Fig. 2 und Fig. 9 weist die zweite Beförderungseinheit 50 anstelle eines Beförderungsbandes zwei Antriebsrollen 76 auf. Die Antriebsrollen 76, welche auch als Beförderungsrollen oder Transportrollen bezeichnet werden können, sind in die Hochrichtung der Vorrichtung 10 übereinander angeordnet. Dabei ist das durch die zweite Abwickeleinheit 68 abgewickelte zweite Zellstapelelementsubstrat 18 zwischen den Antriebsrollen 76 angeordnet. Die Antriebsrollen 76 drehen sich in entgegengesetzte Richtungen. Dabei dreht sich eine der Beförderungsrollen 76 im Uhrzeigersinn und die andere der Antriebsrollen 76 gegen den Uhrzeigersinn. Die Drehrichtung der Antriebsrollen 76 ist durch die Pfeile 78 verdeutlicht. Durch die zweite Beförderungseinheit 50 wird das zweite Zellstapelelementsubstrat 18 in eine Vorschubrichtung bewegt. Die Vorschubrichtung ist durch den Pfeil 52 verdeutlicht. Die Trenneinrichtung 24 umfasst die zweite Trenneinheit 72. Die Beförderungseinrichtung 22 oder die zweite Beförderungseinheit 50 ist dazu eingerichtet, das zweite Zellstapelelementsubstrat 18 zu der Trenneinrichtung 24 oder der zweiten Trenneinheit 72 zu befördern. Die zweite Trenneinheit 72 kann als Laser oder Schneideinrichtung oder Stanzeinrichtung ausgebildet sein. Bei den in den Figuren Fig. 3, Fig. 4 und Fig. 10 bis Fig. 14 gezeigten zweiten Trenneinheit 72 ist diese als ein Laser ausgebildet. Mithilfe eines Laserstrahls 82 trennt die zweite Trenneinheit 72 die zweiten Zellstapelelemente 14 von dem zweiten Zellstapelelementsubstrat 18 ab. Die zweite Trenneinheit 72 ist also dazu eingerichtet, von dem zweiten Zellstapelelementsubstrat 18 die zweiten Zellstapelelemente 14 abzutrennen. Hierzu ist der Laserstrahl 82 auf das Zellstapelelementsubstrat 18 gerichtet. Die zweite Trenneinheit 72 ist dabei an dem zweiten Zuführbereich 60 der Stapeleinrichtung 26 angeordnet. Die zweite Trenneinheit 72 ist dazu eingerichtet, Teile oder Stücke von dem zweiten Zellstapelelementsubstrat 18 abzutrennen, sobald diese eine vorbestimmte Länge erreicht haben oder in einem Stapelbereich 48 der Stapeleinrichtung 26 angeordnet sind. Die zweite Trenneinheit 72 ist dabei in die Hochrichtung der Vorrichtung 10 über der Stapeleinrichtung 26 angeordnet. Das zweite Zellstapelelementsubstrat 18 wird hierzu durch die Öffnung 62 der Wandung 54 in die Stapeleinrichtung 26 geschoben. Das zweite Zellstapelelement 14 wird oder die zweiten Zellstapelelemente 14 werden an einer Außenseite der Wandelemente 54 oder an dem zweiten Zuführbereich 60 oder vor einem Durchtritt durch die Öffnung 62 abgetrennt. Wie in den Figuren Fig. 1 und Fig. 5 bis Fig. 9 sind in den Figuren Fig. 3 und Fig. 10 bis Fig. 14 die Zuführbereiche 46, 60 auf gegenüberliegenden Seiten der Stapeleinrichtung 26 angeordnet. Dabei werden die ersten Zellstapelelemente 12 über eines der Wandelemente über den ersten Zuführbereich 46 und die zweiten Zellstapelelemente 14 über das gegenüberliegende Wandelement über oder durch den zweiten Zuführbereich 60 in die Stapeleinrichtung 26 eingeführt. Deshalb wird an dieser Stelle auf die Ausführungen zu den Figuren Fig. 1 und Fig. 5 bis Fig. 9 verwiesen.

In den Figuren Fig. 3 und Fig. 10 bis Fig. 14 sind die erste Beförderungseinheit 34 und die zweite Beförderungseinheit 50 auf gegenüberliegenden Seiten der Stapeleinrichtung 26 angeordnet. Die erste Abwickeleinheit 28 und/oder die erste Trenneinheit 42 ist dabei auf der gleichen Seite wie die erste Beförderungseinheit 34 angeordnet. Die zweite Abwickeleinheit 68 und/oder die zweite Trenneinheit 72 ist dabei auf der gleichen Seite wie die zweite Beförderungseinheit 50 angeordnet.

Im Folgenden wird der Einlegevorgang oder Stapelvorgang der Zellstapelelemente 12, 14 oder die Herstellung des Zellstapels mithilfe der Vorrichtung 10 in Bezug auf Fig. 3 und Fig. 10 bis Fig. 12 genauer beschrieben:
Bei dieser Stapelvariante werden das erste Zellstapelelementsubstrat 16 und das zweite Zellstapelelementsubstrat 18 als Rollenware bereitgestellt und/oder zugeführt. Hierbei wird über die jeweiligen, voneinander unabhängigen Abwickeleinheiten - erste Abwickeleinheit 28 und zweite Abwickeleinheit 68, welche sich insbesondere auf die jeweiligen Materialien ausgelegten Bahnkantensteuerungen und/oder Tänzersystemen - erstes Tänzersystem 32 und zweites Tänzersystem 74 - zusammensetzen, ein Abrollen des ersten Zellstapelelementsubstrats 16 und des zweiten Zellstapelelementsubstrats 18 realisiert. Die Tänzersysteme - erstes Tänzersystem 32 und zweites Tänzersystem 74 - ermöglichen einen Übergang zwischen den stetig laufenden Abwickeleinheiten 28, 68 und den, insbesondere intermittierenden, Trennprozessen, wodurch insbesondere ein kontinuierliches Abrollen des die ersten Zellstapelelemente 12 umfassenden ersten Zellstapelelementsubstrats 16 und des die zweiten Zellstapelelemente 14 umfassenden zweiten Zellstapelelementsubstrats 18 ermöglicht wird. Je nachdem mit welchem Zellstapelelement 12, 14, gemäß den Anforderungen, der Stapelprozess zu starten ist, erfolgt mit Hilfe der Antriebsrollen 36, 76 der Transport eines einzelnen Segments - also eines ersten Zellstapelelements 12 oder zweiten Zellstapelelements 14 - aus der Vorratsrolle der Rollenware an die Ablageposition. Die Rollenwaren der Zellstapelelemente 12, 14 können dem Trennprozess frei von Verschnitt eingeschoben, oder unter der Erzeugung von Verschnitt auch eingezogen werden. Anschließend erfolgt die Abtrennung durch die jeweilige Trenneinheit 42, 72. Damit keine weiteren Handlingsschritte innerhalb des Stapelprozesses erforderlich werden, wird das vereinzelte Zellstapelelement 12, 14 mithilfe seiner Gewichtskraft direkt in die Stapeleinrichtung 26, insbesondere auf den Träger 56 oder die Ablagefläche 57 des Trägers 56 oder den Stapelbereich 48, eingelegt. Um nun die Sequenz aus aufeinanderfolgenden ersten Zellstapelelementen 12 und zweiten Zellstapelelemente 14 zu erzeugen, wird durch Einbringen und Trennen eines Segments des jeweils anderen Zellstapelelements 12, 14 in die Stapeleinrichtung 26 der Stapelprozess fortgesetzt. Das Ausrichten der Zellstapelelemente 12, 14 in der Stapeleinrichtung 26 erfolgt über eine Führung- oder Positionierungseinrichtung. Nach dem Ablegen jeder einzelnen Komponente erfolgt über eine entsprechende Einheit, also den Träger 56, ein Höhenausgleich, um zum einen die Ablageposition auf konstanter Position zu halten und zum anderen, um die Fallstrecke der Zellstapelelemente 12, 14 nicht zu verändern. Dieser Ablauf wiederholt sich so lange bis die geforderte Anzahl an Zellstapelelementen 12, 14 in die Stapeleinrichtung 26 eingebracht wurde.

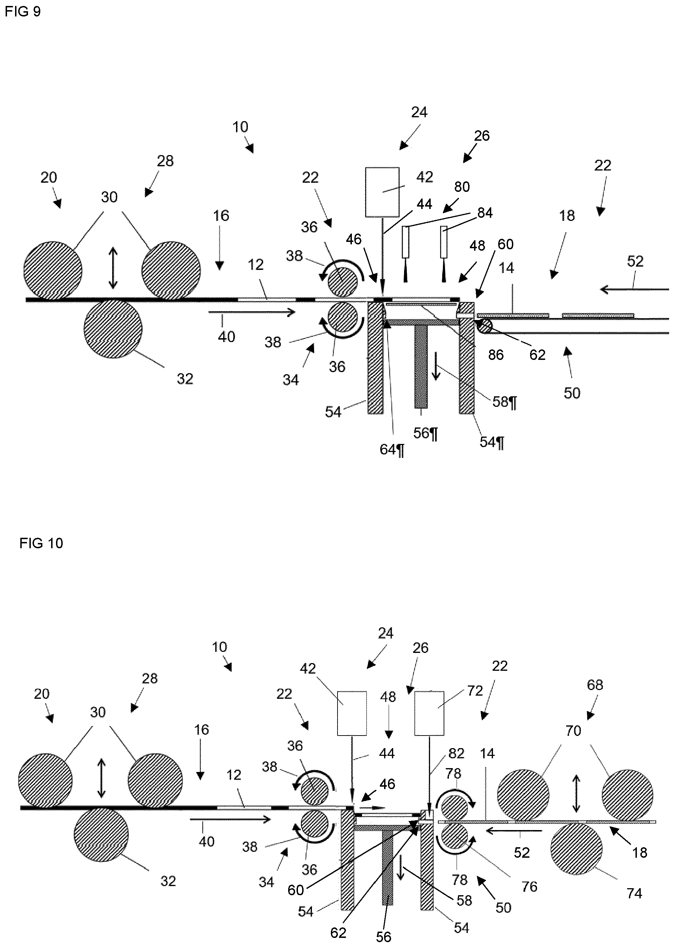

Wie in Fig. 4 gezeigt, ist die zweite Abwickeleinheit 68, die zweite Beförderungseinheit 50 und die zweite Trenneinheit 72 wie die erste Abwickeleinheit 28 und/oder die erste Beförderungseinheit 34 und/oder die erste Trenneinheit 42 auf einer Seite der Stapeleinrichtung 26 angeordnet. Dabei weist das Wandelement 54, welches der ersten Beförderungseinheit 22 und/oder der zweiten Beförderungseinheit 50 zugewandt ist, die Öffnung 62 auf, über welche das zweite Zellstapelelementsubstrat 18 in den Stapelbereich 48 oder in die Stapeleinrichtung 26 befördert oder gefördert oder durchgeschoben oder eingeführt wird. Die zweite Beförderungseinheit 50, die zweite Abwickeleinheit 68 und die zweite Trenneinheit 72 sind in eine Hochrichtung der Vorrichtung 10 unter der ersten Beförderungseinheit 34 und/oder der ersten Abwickeleinheit 28 und/oder der ersten Trenneinheit 42 angeordnet. Die Anordnung der zweiten Abwickeleinheit 68 und/oder der zweiten Beförderungseinheit 50 und/oder der zweiten Trenneinheit 72 ist an die Anordnung der ersten Abwickeleinheit 28 und/oder der ersten Beförderungseinheit 34 und/oder der ersten Trenneinheit 42 angepasst oder daran orientiert, Durch eine zusätzliche Rolle, insbesondere eine Umlenkrolle, wird das zweite Zellstapelelementsubstrat 18 in einer vorbestimmten Anordnung angeordnet. Dabei weist das zweite Zellstapelelementsubstrat 18 im Querschnitt eine Stufenform auf. Der Stapelvorgang erfolgt dabei analog wie er bereits im Zusammenhang mit Fig. 3 und den Figuren Fig. 10 bis Fig. 12 beschrieben worden ist.

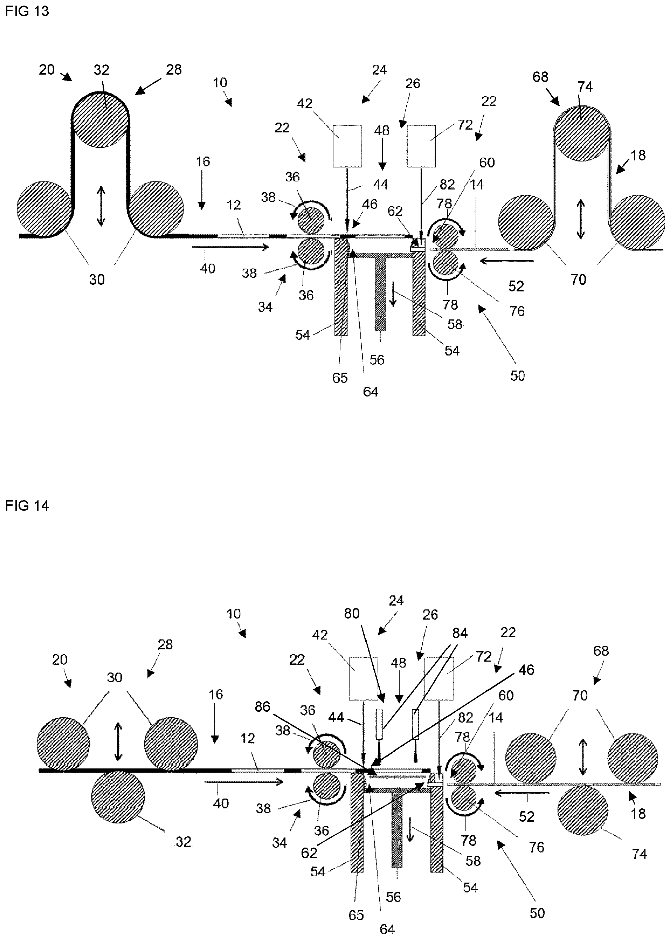

Fig. 13 zeigt die Vorrichtung 10 von Fig. 3 mit einer alternativen Anordnung des zweiten Tänzersystems 74. Dabei ist das zweite Tänzersystem 74 in die Hochrichtung der Vorrichtung 10 über den Abwickelrollen 70 der zweiten Abwickeleinheit 68 angeordnet. Ferner ist das zweite Tänzersystem 74 in die Haupterstreckungsrichtung der Vorrichtung 10 weiterhin zwischen den beiden Abwickelrollen 70 jedoch versetzt in die Hochrichtung der Vorrichtung 10 zu den Abwickelrollen 70 angeordnet. Das zweite Zellstapelelementsubstrat 18 ist aufeinanderfolgend um eine erste Abwickelrolle, das zweite Tänzersystem 74 und eine zweite Abwickelrolle der Abwickelrollen 70 gelegt. Das zweite Zellstapelelementsubstrat 18 ist in einer Schlaufe um das zweite Tänzersystem 74 gelegt oder gewickelt. Hierdurch übernimmt das zweite Tänzersystem 74 die Funktion eines Puffersystems zur Überbrückung der "Rüstzeit" zwischen dem Abschluss des Stapelprozesses und dem Beginn des Stapelprozesses. Somit können die Abwickeleinheiten 28, 68, insbesondere permanent, mit gleichbleibender Bandgeschwindigkeit betrieben werden.

Fig. 9 zeigt die Vorrichtung 10 von Fig. 1 und Fig. 14 die Vorrichtung von Fig. 3 mit einer Düseneinrichtung 80, welche zwei Düsen 82 umfasst. Die Düsen 82 sind als Luftdüsen ausgebildet und dazu eingerichtet, einen Einlegevorgang der Zellstapelelemente 12, 14 in die Stapeleinrichtung 26 zu unterstützen. Die Düsen 82 sind dem Stapelbereich 48 zugewandt oder auf den Stapelbereich 48 gerichtet. Die Düsen 82 sind in die Hochrichtung der jeweiligen Vorrichtung 10 über der Stapeleinrichtung 26 angeordnet.

Fig. 9 und Fig. 14 zeigen zudem eine Führungseinrichtung 86. Die Führungseinrichtung 86 kann beispielsweise eine, insbesondere bewegliche, Ablage für die ersten Zellstapelelemente 12 und/oder zweiten Zellstapelelemente 14 umfassen, welche insbesondere parallel zu einer Ablagefläche 57 des Trägers 56 und/oder zwischen den zumindest zwei Wandelementen 54, insbesondere in dem Stapelbereich 48, angeordnet ist und in eine Hochrichtung der Vorrichtung 10 zum Ablegen der ersten Zellstapelelemente 12 und/oder zweiten Zellstapelelemente 14verfahrbar ist.

Die hier dargestellten Verfahren und Vorrichtungen basieren auf dem Gedanken, zum einen den taktenden Pick-and-Place Stapelprozess durch eine kontinuierliche Stapellösung zu ersetzen und im weiteren die aufwändige Materialzuführung in Form von Vorrats- und/oder Magazinbehältern durch eine Variante mit geringem logistischen Aufwand zu ersetzen. Ein weiterer Vorteil ist dass der Aufbau und Ablauf des Stapelprozesses so gestaltet wird, dass deutlich höhere Taktfrequenzen im Vergleich zum Pick-and-Place Prozess erreicht werden.

Bei vorteilhaften Ausgestaltungen der Erfindung werden sowohl eine Wiederholkomponente - erstes Zellstapelelement und/oder zweites Zellstapelelement - als auch beide Wiederholkomponenten nicht wie bisher in bereits vereinzelter Form aus Vorrats- und/oder Magazinbehälter zugeführt, sondern in Form einer endlosen Rolle oder eines der Zellstapelelemente in Form einer endlosen Rolle und die anderen Zellstapelelemente in vereinzelter Form. Der Positionierungs- und Ablagevorgang der als Rollenware zugeführten Komponenten erfolgt durch einen Trennprozess.

Bei Ausgestaltungen für diese Art der Stack-Assemblierung ist vorgesehen, die Wiederholkomponenten, sei es die ersten Zellstapelelemente oder die zweiten Zellstapelelemente oder beide Komponenten, als endlose Rollenware herzustellen.

In einer ersten Ausführungsform wird ein Aufbau beschrieben, der sich aus einer Zuführung der ersten Zellstapelelemente als Rollenware und der Zuführung der zweiten Zellstapelelemente als vereinzelte Einheiten über eine Bandzuführung zusammensetzt. Der Tausch oder Wechsel der Komponentenzuführung, sprich einer Zuführung der ersten Zellstapelelemente als vereinzelte Einheiten über eine Bandzuführung und einer Zuführung der zweiten Zellstapelelemente als Rollenware kann auf identische Weise beschrieben werden. Gleiches gilt für die räumliche Anordnung der einzelnen Materialzuführungen in Vertikalachse. Die Rollenware befindet sich stets oberhalb der mittels Bandzuführung eingebrachten Wiederholkomponente. Diese Anordnung kann beliebig getauscht werden. Die erforderlichen Änderungen aufgrund dieses Wechsels in der Komponentenzuführung beschränken sich auf das Abwickelsystem samt Tänzersystem, die Trenneinheit und die Sequenzierung der Wiederholkomponenten.

Bei dieser Stapelvariante im Ausgangszustand werden die ersten Zellstapelelemente als Rollenware zugeführt und die zweiten Zellstapelelemente als vereinzelte Einheiten über eine Bandzuführung in die Anlage eingebracht. Hierbei wird über ein Abwickelsystem, das sich im Wesentlichen aus einer Bahnkantensteuerung und einem Tänzersystem zusammensetzt, ein präzises Abrollen der im Rollenware realisiert.

Zudem ermöglicht das Tänzersystem den Übergang zwischen dem stetig laufenden Abwickelsystem und dem gegebenenfalls taktenden Trennprozess, wodurch ein kontinuierliches Abrollen der Wiederholkomponente ermöglicht wird. Gleichzeitig fungiert das System als Puffersystem, um den Zeitraum zwischen dem Abschluss der Stack-Assemblierung und dem Beginn des Stapelprozesses des nachfolgenden Stacks zu überbrücken. Somit kann das Abwickelsystem permanent mit gleichbleibender Bandgeschwindigkeit betrieben werden.

Nachdem mithilfe der Antriebsrollen das Abwickelsystem ein Einzelsegment aus der Vorratsrolle des ersten Zellstapelelementsubstrats an die Ablageposition transportiert wird, erfolgt die Abtrennung durch die entsprechende Trenneinheit. Um keinen Verschnitt zu erzeugen, wird die Rollenware dem Trennprozess durch Einschieben zugeführt. Ein Einziehen der Rollenware in Kombination mit Verschnitt der Randverstärkungsfolie ist ebenfalls umsetzbar. Damit keine weiteren Handlingsschritte innerhalb des Stapelprozesses erforderlich werden, wird das nun vereinzelte Zellstapelelement mithilfe der Gewichtskraft direkt in eine Stapelvorrichtung eingelegt. Zusatzsysteme wie zum Beispiel Luft- oder Steuerdüsen für eine Unterstützung des Einlegevorgangs können vorgesehen sein. Weiter sind während des Trennvorgangs gegebenenfalls taktende Gleit- und/oder Führungselemente erforderlich, um ein sicheres Einlegen des von der Rolle abgetrennten im Segments zu realisieren. Ob solche Zusatzsysteme vorgesehen werden oder nicht, ist von den Materialien und Dimensionen der Wiederholeinheiten abhängig.

Um die korrekte Sequenz aus aufeinanderfolgenden ersten Zellstapelelementen und zweiten Zellstapelelementen zu erzeugen, wird durch seitliches Einschieben ein bereits vereinzeltes zweites Zellstapelelement über eine Bandzuführung in die Stapelvorrichtung eingebracht. Das finale Ausrichten der Wiederholkomponenten in der Stapeleinrichtung erfolgt, je nach Ausführungsform, durch ein aktives oder passives Führung- oder Positionierungssystem.

Nach dem Ablegen jeder einzelnen Komponente erfolgt über eine entsprechende Einheit ein Höhenausgleich, um zum einen die Ablageposition auf konstanter Position zu halten und zum anderen die Fallstrecke der ersten und zweiten Zellstapelelemente nicht zu verändern.

Dieser Ablauf wiederholt sich so lange, bis die geforderte Anzahl an Wiederholkomponenten in die Stack-Vorrichtung eingebracht wurde.

Gemäß einer alternativen Ausführungsform setzt sich die Zuführung aus einer Zuführung der ersten Zellstapelelemente als Rollenware als auch der zweiten Zellstapelelemente als Rollenware zusammen. Der Tausch oder Wechsel der Komponentenzuführung in Bezug auf deren räumliche Anordnung in der Vertikalachse, kann auf identische Weise beschrieben werden. Die Sequenzierung der Wiederholkomponenten ist dann entsprechend den Anforderungen abzustimmen.

Da es sich bei der Stapelvariante ausschließlich um eine Änderung in der Anordnung der Materialzuführung handelt, resultiert eine Änderung im Ablauf der Stack-Assimilierung. Die hier vorgesehenen Änderungen aufgrund des Wechsels in der Komponentenzuführung beschränken sich auf die Abwickelsysteme samt Tänzersystemen, die Trenneinheiten und die Sequenzierung der Wiederholkomponenten. Sowohl die ersten Zellstapelelemente als auch die zweiten Zellstapelelemente werden als Rollenware zugeführt. Hierbei wird über die jeweiligen, voneinander unabhängigen Abwickelsysteme die sich, analog der ersten bereits beschriebenen Stapelvariante, die sich im Wesentlichen aus spezifisch auf die jeweiligen Materialien ausgelegten Bahnkantenteuerungen und Tänzersystemen zusammensetzen, ein präzises Abrollen der Wiederholkomponenten realisiert. Diese Tänzersysteme ermöglichen weiterhin den Übergang zwischen den stetig laufenden Abwickelsystemen und den gegebenenfalls intermittierenden Trennprozessen, wodurch ein kontinuierliches Abrollen der Wiederholkomponenten ermöglicht wird.

Die Funktion der Tänzersysteme als Puffersysteme zur Überbrückung der Rüstzeit zwischen dem Abschluss der Stack-Assimilierung und dem Beginn des Stapelprozesses bleibt vollständig erhalten. Somit können die Abwickelsysteme wiederum permanent und gleichbleibender Bandgeschwindigkeit betrieben werden. Je nachdem mit welcher Wiederholkomponente, gemäß den Anforderungen, der Stapelprozess zu starten ist, erfolgt mithilfe der Antriebsrollen des Abwickelsystems der Transport eines einzelnen Segments aus der Vorratsrolle an die Ablageposition. Die Rollenware der Wiederholkomponenten können im Trennprozess frei von Verschnitt eingeschoben oder unter der Erzeugung von Verschnitt auch eingezogen werden. Anschließend erfolgt die Abtrennung durch die jeweilige Trenneinheit. Damit keine weiteren Handlingsschritte innerhalb des Stapelprozesses erforderlich werden, wird die nun vereinzelte Wiederholkomponente mithilfe ihrer Gewichtskraft direkt in eine Stapelvorrichtung eingelegt. Zusatzsysteme wie zum Beispiel Luft- und/oder Steuerdüsen für eine Unterstützung des Einlegevorgangs sind für beide Wiederholeinheiten denkbar. Weiter sind während des Trennvorgangs gegebenenfalls taktende Gleit- und/oder Führungselemente vorgesehen, um ein sicheres Einlegen des von der Rolle abgetrennten Segments der Wiederholkomponenten zu realisieren. Ob solche Zusatzsysteme vorgesehen werden oder nicht, ist von den Materialien und Dimensionen der Wiederholeinheiten oder Wiederholkomponenten abhängig. Um nun die korrekte Sequenz aus aufeinanderfolgenden ersten und zweiten Zellstapelelementen zu erzeugen, wird durch Einbringen und Trennen eines Segments der jeweils anderen Wiederholkomponente in die Stapelvorrichtung der Stapelprozess fortgesetzt. Das finale Ausrichten der Wiederholkomponenten in der Stapelvorrichtung erfolgt, je nach Ausführungsform, durch ein aktives oder passives Führung- oder Positionierungssystem. Nach dem Ablegen jeder einzelnen Komponente erfolgt über eine entsprechende Einheit ein Höhenausgleich, um zum einen die Ablageposition auf konstanter Position zu halten und zum anderen die Fallstrecke der Wiederholkomponenten nicht zu verändern. Dieser Ablauf wiederholt sich so lange, bis die geforderte Anzahl an Wiederholkomponenten in die Stack-Vorrichtung oder Stapeleinrichtung eingebracht wurde.

### Bezugszeichenliste:

- 10: Vorrichtung
- 12: erstes Zellstapelelement
- 14: zweites Zellstapelelement
- 16: erstes Zellstapelelementsubstrat
- 18: zweites Zellstapelelementsubstrat
- 20: Abwickeleinrichtung
- 22: Beförderungseinrichtung
- 24: Trenneinrichtung
- 26: Stapeleinrichtung
- 28: erste Abwickeleinheit
- 30: Abwickelrollen
- 32: erstes Tänzersystem
- 34: erste Beförderungseinheit
- 36: Antriebsrollen
- 38: Pfeil
- 40: Pfeil
- 42: erste Trenneinheit
- 44: Laserstrahl
- 46: erster Zuführbereich
- 48: Stapelbereich
- 50: zweite Beförderungseinheit
- 52: Pfeil
- 54: Wandelement
- 56: Träger
- 57: Ablagefläche
- 58: Pfeil
- 60: zweiter Zuführbereich
- 62: Öffnung
- 64: Gleiteinrichtung
- 65: Gleitelement
- 66: Ablagebereich
- 68: zweite Abwickeleinheit
- 70: Abwickelrollen
- 72: zweite Trenneinheit
- 74: zweites Tänzersystem
- 76: Antriebsrolle
- 78: Pfeil
- 80: Düseneinrichtung
- 82: Laserstrahl
- 84: Düsen
- 86: Führungseinrichtung

## Patentansprüche

1. Verfahren zum Herstellen einer zumindest ein erstes Zellstapelelement (12) und zumindest ein zweites Zellstapelelement (14) umfassenden Schichtanordnung für einen Zellstapel einer Brennstoffzelle, umfassend:
a) Bereitstellen eines bahnförmigen ersten Zellstapelelementsubstrats (16),
b) Fördern des bahnförmigen Zellstapelelementsubstrats (16) zu einer Stapeleinrichtung (26) und Abtrennen einzelner erster Zellstapelelemente (12) von dem Zellstapelelementsubstrat (16) beim Einführen in die Stapeleinrichtung (26);
c) Bereitstellen einzelner zweiter Zellstapelelemente (14) an der Stapeleinrichtung (26) und
d) Aufeinanderstapeln einzelner erster Zellstapelelemente (12) und zweiter Zellstapelelemente (14) in der Stapeleinrichtung (26).

2. Verfahren nach Anspruch 1,
**dadurch gekennzeichnet,**
**dass** Schritt a) wenigstens einen oder mehrere der Schritte umfasst:
a1) Bereitstellen des ersten Zellstapelelementsubstrats (16) als erste Rollenware;
a2) Bereitstellen des ersten Zellstapelelementsubstrats (16) auf einer Vorratsrolle;
a3) Bereitstellen eines bahnförmigen Materials zum Bilden einer Wiederholkomponente eines Zellstapels einer Brennstoffzelle als erstes Zellstapelelementsubstrat (16);
a4) Bereitstellen eines bahnförmigen Membran-Elektrodeneinheit-Materials, aus dem durch Vereinzeln Membran-Elektrodeneinheiten als erste Zellstapelelemente gebildet werden, oder eines bahnförmigen Bipolarplatten-Materials, aus dem durch Vereinzeln Bipolarplatten als erste Zellstapelelemente (12) gebildet werden;
a5) Bereitstellen eines bahnförmigen Folienmaterials, welches die einzelnen ersten Zellstapelelemente (12) bildet, als erstes Zellstapelelementsubstrat (16), wobei die ersten Zellstapelelemente (12) mit einem Verschnitt vereinzelt werden, sodass ein Rand der einzelnen Zellstapelelemente (12) mit einer Randverstärkungsfolie ausgebildet ist;
a6) Abwickeln des ersten Zellstapelelementsubstrats (16) mittels einer ersten Abwickeleinheit (28) einer Abwickeleinrichtung (20) von einer ersten Rolle; und/oder dass Schritt b) wenigstens einen oder mehrere der Schritte umfasst:
b1) Befördern des bahnförmigen ersten Zellstapelelementsubstrats (16) zu einer an der Stapeleinrichtung (26) ausgebildeten Trenneinrichtung (24),
b2) Befördern des bahnförmigen ersten Zellstapelelementsubstrats (16) zu einer an einer Zuführung der Stapeleinrichtung (26) angeordneten ersten Trenneinheit (42) einer Trenneinrichtung (24) und Abtrennen der ersten Zellstapelelemente (12) mittels der ersten Trenneinheit (42);
b3) Befördern des bahnförmigen ersten Zellstapelelementsubstrats (16) mittels einer ersten Beförderungseinheit (34) einer Beförderungseinrichtung (22);
b4) Abtrennen mehrerer Teile des bahnförmigen ersten Zellstapelelementsubstrats (16) in vorbestimmten zeitlichen Abständen zu mehreren ersten Zellstapelelementen (12);
b5) Zuführen der einzelnen abgetrennten ersten Zellstapelelemente (12) in die Stapeleinrichtung (26) zum Bilden der Schichtanordnung.

3. Verfahren nach einem der voranstehenden Ansprüche,
**dadurch gekennzeichnet,**
**dass** Schritt c) wenigstens einen oder mehrere der Schritte umfasst:
c1) Bereitstellen eines zweiten Zellstapelelementsubstrats (18) als bahnförmiges zweites Zellstapelelementsubstrat (18) und Abtrennen einzelner zweiter Zellstapelelemente (14) von dem zweiten Zellstapelelementsubstrat (18);
c2) Bereitstellen eines zweiten Zellstapelelementsubstrats (18) als zweite Rollenware und Abtrennen einzelner zweiter Zellstapelelemente (14) von dem zweiten Zellstapelelementsubstrat (18);
c3) Bereitstellen eines zweiten Zellstapelelementsubstrats (18) auf einer Vorratsrolle und Abtrennen einzelner zweiter Zellstapelelemente (14) von dem zweiten Zellstapelelementsubstrat (18);
c4) Bereitstellen eines bahnförmigen Materials zum Bilden einer Wiederholkomponente eines Zellstapels einer Brennstoffzelle als zweites Zellstapelelementsubstrat (18) und Abtrennen einzelner zweiter Zellstapelelemente (14) von dem zweiten Zellstapelelementsubstrat (18);
c5) Bereitstellen eines bahnförmigen Membran-Elektrodeneinheit-Materials, aus dem durch Vereinzeln Membran-Elektrodeneinheiten als zweite Zellstapelelemente (14) gebildet werden, oder eines bahnförmigen Bipolarplatten-Materials, aus dem durch Vereinzeln Bipolarplatten als zweite Zellstapelelemente (14) gebildet werden;
c6) Bereitstellen eines bahnförmigen Folienmaterials, welches die einzelnen zweiten Zellstapelelemente (14) bildet, als zweites Zellstapelelementsubstrat auf 18), wobei die zweiten Zellstapelelemente (14) mit einem Verschnitt vereinzelt werden, sodass ein Rand der einzelnen Zellstapelelemente (14) mit einer Randverstärkungsfolie ausgebildet ist;
c7) Abwickeln des zweiten Zellstapelelementsubstrats (18) mittels einer zweiten Abwickeleinheit (68) einer Abwickeleinrichtung (20) von einer zweiten Rolle und Abtrennen einzelner zweiter Zellstapelelemente (14) von dem zweiten Zellstapelelementsubstrat (18);
c8) Fördern des zweiten Zellstapelelementsubstrats (18) zu der Stapeleinrichtung (26) und Abtrennen einzelner zweiter Zellstapelelemente (14) von dem zweiten Zellstapelelementsubstrat (18) beim Einführen in die Stapeleinrichtung (26);
c9) Fördern des zweiten Zellstapelelementsubstrats (18) zu der an der Stapeleinrichtung (26) ausgebildeten Trenneinrichtung (24) und Abtrennen einzelner zweiter Zellstapelelemente (14) von dem zweiten Zellstapelelementsubstrat (18) mittels der Trenneinrichtung (24), c10) Fördern des zweiten Zellstapelelementsubstrats (18) zu einer an einer Zuführung der Stapeleinrichtung (26) angeordneten ersten Trenneinheit (42) oder zweiten Trenneinheit (72) einer Trenneinrichtung (24) und Abtrennen der zweiten Zellstapelelemente (14) mittels der ersten Trenneinheit (42) oder der zweiten Trenneinheit (72);
c11) Fördern des zweiten Zellstapelelementsubstrats (18) mittels einer zweiten Beförderungseinheit (50) einer Beförderungseinrichtung (22);
c12) Abtrennen mehrerer Teile von einem zweiten Zellstapelelementsubstrat (18) in vorbestimmten zeitlichen Abständen zu mehreren zweiten Zellstapelelementen (14);
c13) Bereitstellen der einzelnen zweiten Zellstapelelemente (14) zum Bilden einer Wiederholkomponente eines Zellstapels einer Brennstoffzelle;
c14) Bereitstellen einzelner Membran-Elektrodeneinheiten und/oder Bipolarplatten als zweite Zellstapelelemente (14);
c15) Befördern der einzelnen zweiten Zellstapelelemente (14) mittels einer zweiten Beförderungseinheit (50) einer Beförderungseinrichtung (22);
c16) Zuführen der einzelnen zweiten Zellstapelelemente (14) in die Stapeleinrichtung (26) zum Bilden der Schichtanordnung.

4. Verfahren nach einem der voranstehenden Ansprüche,
**dadurch gekennzeichnet,**
**dass** Schritt d) wenigstens einen oder mehrere der Schritte umfasst:
d1) abwechselndes Aufeinanderstapeln der ersten Zellstapelelemente (12) und der zweiten Zellstapelelemente (14);
d2) Einführen der ersten Zellstapelelemente (12) und der zweiten Zellstapelelemente (14) in die Stapeleinrichtung (26) in zeitlich vorbestimmten Abständen oder gleichzeitig;
d3) Einführen der ersten Zellstapelelemente (12) und der zweiten Zellstapelelemente (14) in die Stapeleinrichtung (26) durch Zuführen der ersten Zellstapelelemente (12) von einer Seite der Stapeleinrichtung (26) und der zweiten Zellstapelelemente (14) von der gegenüberliegenden Seite der Stapeleinrichtung (26);
d4) Einführen der ersten Zellstapelelemente (12) und der zweiten Zellstapelelemente (14) in die Stapeleinrichtung (26) durch Zuführen der ersten Zellstapelelemente (12) und der zweiten Zellstapelelemente (14) von einer Seite der Stapeleinrichtung (26);
d5) Aufeinanderstapeln der ersten Zellstapelelemente (12) und der zweiten Zellstapelelemente (14) auf einem Träger (56), wobei der Träger (56) in eine Hochrichtung der Stapeleinrichtung (26) bewegt wird, sodass eine Ablageposition, an welcher die Zellstapelelemente (12, 14) in der Stapeleinrichtung (26) abgelegt werden, gleich gehalten wird;
d6) Ausüben einer Kraft durch eine an der Stapeleinrichtung (26) angeordnete Düseneinrichtung (80), welche insbesondere zumindest eine Luftdüse und/oder zumindest eine Steuerdüse umfasst, auf die ersten Zellstapelelemente (12) und/oder die zweiten Zellstapelelemente (14) in der Stapeleinrichtung (26) zum Unterstützen eines Einlegevorgangs in einen Aufnahmebereich der Stapeleinrichtung (26) zum Aufeinanderstapeln der ersten Zellstapelelemente (12) und der zweiten Zellstapelelemente (14);
d7) Ausrichten und/oder Zentrieren der in der Stapeleinrichtung (26) aufgenommenen ersten Zellstapelelemente (12) und der zweiten Zellstapelelemente (14) durch eine auf die aufgenommenen Zellstapelelemente (12, 14) wirkende Positioniereinrichtung, besonders bevorzugt durch Bewegung der Positioniereinrichtung, besonders bevorzugt durch Vibration der Positioniereinrichtung;
d8) Einführen der in die Stapeleinrichtung (26) geförderten ersten Zellstapelelemente (12) und/oder zweiten Zellstapelelemente (14) mittels einer, insbesondere getakteten, Führungs- oder Gleiteinrichtung (64, 86).

5. Vorrichtung (10) zum Herstellen einer zumindest ein erstes Zellstapelelement (12) und zumindest ein zweites Zellstapelelement (40) umfassenden Schichtanordnung für einen Zellstapel einer Brennstoffzelle, umfassend:
a) eine erste Zellstapelelementsubstratbereitstelleinrichtung zum Bereitstellen eines bahnförmigen ersten Zellstapelelementsubstrats (16) und eine zweite Zellstapelelementbereitstelleinrichtung zum Bereitstellen zweiter Zellstapelelemente (14);
b) eine Beförderungseinrichtung (22), welche dazu eingerichtet ist, das bahnförmige erste Zellstapelelementsubstrat (16) zu befördern, und
c) eine Trenneinrichtung (24), welche dazu eingerichtet ist, einzelne erste Zellstapelelemente (12) von dem bahnförmigen ersten Zellstapelelementsubstrat (16) abzutrennen; und
d) eine Stapeleinrichtung (26), welche dazu eingerichtet ist, die einzelnen abgetrennten ersten Zellstapelelemente (12) und die zweiten Zellstapelelemente (14) zum Bilden der Schichtanordnung aufzunehmen, wobei die einzelnen ersten Zellstapelelemente (12) und die zweiten Zellstapelelemente (14) in der Stapeleinrichtung (26) aufeinandergestapelt sind.

6. Vorrichtung (10) nach Anspruch 5,
**dadurch gekennzeichnet, dass**
die erste Zellstapelelementsubstratbereitstelleinrichtung und/oder die zweite Zellstapelelementbereitstelleinrichtung eine Abwickeleinrichtung (20) aufweisen, die
a1) zumindest zwei Abwickelrollen (30, 70) umfasst, wobei die Abwickelrollen (30, 70) dazu eingerichtet sind, das bahnförmige erste Zellstapelelementsubstrat (16) von einer ersten Rolle abzuwickeln; und/oder
a2) zumindest ein Tänzersystem (32, 74) umfasst, wobei das Tänzersystem (32, 74) dazu eingerichtet ist, beim Abwickeln des bahnförmigen ersten Zellstapelelementsubstrats (16) von einer ersten Rolle eine Zugkraft oder eine Bandgeschwindigkeit zu steuern, wobei das Tänzersystem (32, 74) insbesondere dazu eingerichtet ist, die Zugkraft derart zu steuern, dass das erste Zellstapelelementsubstrat (16) kontinuierlich oder getaktet abrollbar ist; und/oder
a3) eine Bahnkantensteuerung umfasst; und/oder
a4) als ein Puffersystem ausgebildet ist; und/oder
a5) zumindest zwei Abwickelrollen (30, 70) und zumindest ein Tänzersystem (32, 74) umfasst, wobei das Tänzersystem (32, 74) zwischen den zumindest zwei Abwickelrollen (30, 70) und/oder in eine Hochrichtung der Vorrichtung (10) über den zumindest zwei Abwickelrollen (30, 70) angeordnet ist; und/oder
a6) zumindest eine erste Abwickeleinheit (28) zum Abwickeln des bahnförmigen ersten Zellstapelelementsubstrats (16) und/oder zum Abwickeln einer ersten Rollenware als erstes Zellstapelelementsubstrat (16) und/oder zum Abwickeln des auf einer Vorratsrolle gewickelten ersten Zellstapelelementsubstrats (16) umfasst; und/oder
a7) zumindest eine zweite Abwickeleinheit (68) zum Abwickeln zumindest eines zweiten Zellstapelelementsubstrats (18), welches die zweiten Zellstapelelemente (14) umfasst, und/oder zum Abwickeln eines bahnförmigen zweiten Zellstapelelementsubstrats (18), welches die zweiten Zellstapelelemente (14) umfasst, und/oder zum Abwickeln einer zweiten Rollenware als zweites Zellstapelelementsubstrat (18), welches die zweiten Zellstapelelemente (14) umfasst, und/oder zum Abwickeln eines auf einer Vorratsrolle gewickelten zweiten Zellstapelelementsubstrats (18), welches die zweiten Zellstapelelemente (14) umfasst, aufweist; und/oder
a8) zumindest eine erste Abwickeleinheit (28) zum Abwickeln des bahnförmigen ersten Zellstapelelementsubstrats (16) und/oder zumindest eine zweite Abwickeleinheit (68) zum Abwickeln zumindest eines zweiten Zellstapelelementsubstrats (18), welches die zweiten Zellstapelelemente (14) umfasst, aufweist, wobei die erste Abwickeleinheit (28) und/oder die zweite Abwickeleinheit (68) zumindest zwei Abwickelrollen (30, 70) und/oder zumindest ein Tänzersystem (32, 74) aufweisen;
a9) zumindest eine erste Abwickeleinheit (28) zum Abwickeln des ersten Zellstapelelementsubstrats (16) und zumindest eine zweite Abwickeleinheit (68) zum Abwickeln zumindest eines zweiten Zellstapelelementsubstrats (18), welches die zweiten Zellstapelelemente (14) umfasst, aufweist, wobei die erste Abwickeleinheit (28) und die zweite Abwickeleinheit (68) auf einander gegenüberliegenden Seiten der Stapeleinrichtung (26) oder auf einer Seite der Stapeleinrichtung (26) angeordnet sind.

7. Vorrichtung (10) nach Anspruch 5 oder 6,
**dadurch gekennzeichnet, dass**
die Beförderungseinrichtung (22)
b1) zumindest zwei Antriebsrollen (36, 76) umfasst, wobei das bahnförmige erste Zellstapelelementsubstrat (16) zwischen den zumindest zwei Antriebsrollen (36, 76) angeordnet ist, wobei die zumindest zwei Antriebsrollen (36, 76) dazu eingerichtet sind, das bahnförmige erste Zellstapelelementsubstrat (16) zu bewegen; und/oder
b2) ein Beförderungsband umfasst, wobei die ersten Zellstapelelemente (12) oder die zweiten Zellstapelelemente (14) auf dem Beförderungsband aufliegen; und/oder
b3) zwischen der Abwickeleinrichtung (20) und der Stapeleinrichtung (26) angeordnet ist; und/oder
b4) zumindest eine erste Beförderungseinheit (34) zum Befördern des ersten Zellstapelelementsubstrats (16) umfasst, wobei die erste Beförderungseinheit (34) dazu eingerichtet ist, das erste bahnförmige Zellstapelelementsubstrat (16) zu der Trenneinrichtung (24) zu befördern; und/oder
b5) zumindest eine zweite Beförderungseinheit (50) zum Befördern zumindest eines zweiten Zellstapelelementsubstrats (18) umfasst, wobei die zweite Beförderungseinheit (50) dazu eingerichtet ist, das zweite Zellstapelelementsubstrat (18) zu der Trenneinrichtung (24) zum Abtrennen einzelner zweiter Zellstapelelemente (14) von dem zweiten Zellstapelelementsubstrat (18) zu befördern; und/oder
b6) zumindest eine zweite Beförderungseinheit (50) zum Befördern der zweiten Zellstapelelemente (14) zu der Stapeleinrichtung (26) umfasst; und/oder
b7) zumindest eine erste Beförderungseinheit (34) zum Befördern des ersten Zellstapelelementsubstrats (16) und/oder zumindest eine zweite Beförderungseinheit (50) zum Befördern zumindest eines zweiten Zellstapelelementsubstrats (18) aufweist, welches die zweiten Zellstapelelemente (14) umfasst, wobei die erste Beförderungseinheit (34) und/oder die zweite Beförderungseinheit (50) zumindest zwei Antriebsrollen (36, 76) umfassen; und/oder
b8) zumindest eine erste Beförderungseinheit (34) zum Befördern des ersten Zellstapelelementsubstrats (16) und zumindest eine zweite Beförderungseinheit (50) zum Befördern der zweiten Zellstapelelemente (14) aufweist, wobei die zweite Beförderungseinheit (50) zumindest ein Beförderungsband umfasst, wobei die zweiten Zellstapelelemente (14) auf dem Beförderungsband aufliegen; und/oder
b9) zumindest eine erste Beförderungseinheit (34) zum Befördern des ersten Zellstapelelementsubstrats (16) und zumindest eine zweite Beförderungseinheit (50) zum Befördern zumindest eines zweiten Zellstapelelementsubstrats (18), welches die zweiten Zellstapelelemente (14) umfasst, oder der zweiten Zellstapelelemente (14) umfasst, wobei die erste Beförderungseinheit (34) und die zweite Beförderungseinheit (50) auf einander gegenüberliegenden Seiten der Stapeleinrichtung (26) oder auf einer Seite der Stapeleinrichtung auf (26) angeordnet sind.

8. Vorrichtung (10) nach einem der Ansprüche 5 bis 7, **dadurch**
**gekennzeichnet, dass**
die Trenneinrichtung (24)
c1) dazu eingerichtet ist, das bahnförmige erste Zellstapelelementsubstrat (16) zu einem Zellstapelelement (12) und/oder ein zweites Zellstapelelementsubstrat (18) zu einem Zellstapelelement (14) abzutrennen, sobald der abzutrennende Teil des ersten bahnförmigen Zellstapelelementsubstrats (16) und/oder des zweiten Zellstapelelementsubstrats (18) in einem Stapelbereich (48) der Stapeleinrichtung (26) angeordnet ist oder eine vorbestimmte Länge erreicht; und/oder
c2) eine erste Trenneinheit (42) umfasst, welche dazu eingerichtet ist, die ersten Zellstapelelemente (14) des ersten bahnförmigen Zellstapelelementsubstrats (16) und/oder die zweiten Zellstapelelemente (14) von einem zweiten Zellstapelelementsubstrat (18) abzutrennen, wobei die erste Trenneinheit (42) an einer Zuführung der Stapeleinrichtung (26) angeordnet ist; und/oder
c3) eine zweite Trenneinheit (20) umfasst, welche dazu eingerichtet ist, die zweiten Zellstapelelemente (14) von einem zweiten Zellstapelelementsubstrat (18) abzutrennen, wobei die zweite Trenneinheit (72) an einer weiteren Zuführung der Stapeleinrichtung auf (26) angeordnet ist; und/oder
c4) zumindest eine erste Trenneinheit (42) zum Abtrennen der ersten Zellstapelelemente (12) von dem ersten Zellstapelelementsubstrat (16) und zumindest eine zweite Trenneinheit (72) zum Abtrennen der zweiten Zellstapelelemente (14) von zumindest einem zweiten Zellstapelelementsubstrat (18) umfasst, wobei die erste Trenneinheit (42) und die zweite Trenneinheit (72) auf einander gegenüberliegenden Seiten der Stapeleinrichtung (26) oder auf einer Seite der Stapeleinrichtung (26) angeordnet sind; und/oder
c5) zumindest einen Laser und/oder zumindest eine Schneideinrichtung und/oder zumindest eine Stanzeinrichtung umfasst.

9. Vorrichtung (10) nach einem der vorhergehenden Ansprüche 5 bis 8, **dadurch gekennzeichnet, dass**
die Stapeleinrichtung (26)
d1) einen Träger (56) aufweist, wobei die ersten Zellstapelelemente (12) und die zweiten Zellstapelelemente (14) auf dem Träger (56) stapelbar sind, wobei eine Betätigungseinrichtung der Stapeleinrichtung (26) dazu eingerichtet ist, den Träger (56) in eine Hochrichtung der Vorrichtung (10), zu bewegen, insbesondere derart zu bewegen, dass eine Ablageposition, an welcher die Zellstapelelemente (12, 14) in der Stapeleinrichtung (26) abgelegt werden, gleich gehalten wird; und/oder
d2) zumindest zwei Wandelemente (54) umfasst, welche insbesondere parallel zueinander angeordnet sind, wobei die ersten Zellstapelelemente (12) und die zweiten Zellstapelelemente (14) zwischen den zumindest zwei Wandelementen (54) aufgenommen oder angeordnet sind; und/oder
d3) eine Führungs- und/oder Gleiteinrichtung (64, 86) umfasst, welche dazu eingerichtet ist, die in die Stapeleinrichtung (26) geförderten ersten Zellstapelelemente (12) und/oder zweiten Zellstapelelemente (14) einzuführen; und/oder
d4) eine Positioniereinrichtung aufweist, wobei die Positioniereinrichtung dazu eingerichtet ist, die in der Stapeleinrichtung (26) aufgenommenen ersten Zellstapelelemente (12) und/oder zweiten Zellstapelelemente (14), insbesondere durch eine Bewegung der Positioniereinrichtung, besonders bevorzugt durch Vibration der Positioniereinrichtung, auszurichten oder in der Stapeleinrichtung (26) zu zentrieren.

10. Vorrichtung (10) nach einem der Ansprüche 5 bis 9,
**dadurch gekennzeichnet, dass**
die Vorrichtung (10) eine Sensoreinrichtung umfasst, wobei die Sensoreinrichtung dazu eingerichtet ist,
e1) die abzutrennenden ersten Zellstapelelementteile zu erfassen; und/oder
e2) die abzutrennenden zweiten Zellstapelelementteile von einem zweiten Zellstapelelementsubstrat (18) zu erfassen; und/oder
e3) eine Kamera und/oder einen Infarot-Sensor umfasst.

11. Vorrichtung nach einem der Ansprüche 5 bis 10,
**dadurch gekennzeichnet, dass**
die Vorrichtung eine Steuereinrichtung aufweist, welche dazu eingerichtet ist, die Abwickeleinrichtung (20) und/oder die Beförderungseinrichtung (22) und/oder die Trenneinrichtung (24) und/oder die Stapeleinrichtung (26) zum Herstellen der Schichtanordnung für den Zellstapel der Brennstoffzelle anzusteuern.

12. Vorrichtung (10) nach einem der Ansprüche 5 bis 11,
**dadurch gekennzeichnet, dass**
das bahnförmige erste Zellstapelelementsubstrat (16)
f1) als bahnförmiges Material zum Bilden einer Wiederholkomponente des Zellstapels der Brennstoffzelle ausgebildet ist; und/oder
f2) als bahnförmiges Membran-Elektrodeneinheit-Material, aus dem durch Vereinzeln Membran-Elektrodeneinheiten als erste Zellstapelelemente (12) bereitstellbar sind, oder als bahnförmiges Bipolarplatten-Material ausgebildet ist, aus dem durch Vereinzeln Bipolarplatten als erste Zellstapelelemente (12) bereitstellbar sind; und/oder
f3) als ein bahnförmiges Folienmaterial ausgebildet ist, welches die einzelnen ersten Zellstapelelemente (12) bildet, wobei die ersten Zellstapelelemente (12) mit einem Verschnitt vereinzelbar sind, sodass ein Rand der einzelnen Zellstapelelemente (12) mit einer Randverstärkungsfolie ausgebildet ist.

13. Vorrichtung (10) nach einem der Ansprüche 6 bis 8 und 10,
**dadurch gekennzeichnet, dass**
das zweite Zellstapelelementsubstrat (18)
g1) als bahnförmiges zweites Zellstapelelementsubstrat (18) ausgebildet ist; und/oder
g2) als bahnförmiges Material zum Bilden einer Wiederholkomponente des Zellstapels der Brennstoffzelle ausgebildet ist; und/oder
g3) als bahnförmiges Membran-Elektrodeneinheit-Material, aus dem durch Vereinzeln Membran-Elektrodeneinheiten als zweite Zellstapelelemente (14) bereitstellbar sind, oder als bahnförmiges Bipolarplatten-Material ausgebildet ist, aus dem durch Vereinzeln Bipolarplatten als zweite Zellstapelelemente (14) bereitstellbar sind; und/oder
g4) als ein bahnförmiges Folienmaterial ausgebildet ist, welches die einzelnen zweiten Zellstapelelemente (14) einfasst, wobei die zweiten Zellstapelelemente (14) mit einem Verschnitt vereinzelbar sind, sodass ein Rand der einzelnen Zellstapelelemente (14) mit einer Randverstärkungsfolie ausgebildet ist.

14. Vorrichtung (10) nach einem der Ansprüche 5 bis 12,
**dadurch gekennzeichnet, dass**
die zweiten Zellstapelelemente (14)
h1) als einzelne zweite Zellstapelelemente (14) ausgebildet sind; und/oder
h2) als Membran-Elektrodeneinheiten ausgebildet sind; und/oder
h3) als Bipolarplatten ausgebildet sind.

15. Computerprogrammprodukt, umfassend Befehle, die bei der Ausführung eines Programms durch eine Steuereinrichtung der Vorrichtung (10) nach einem der Ansprüche 5 bis 14 diese veranlassen das Verfahren nach einem der Ansprüche 1 bis 4 auszuführen, wobei die Steuereinrichtung insbesondere dazu eingerichtet ist, die Bereitstelleinrichtungen, die Abwickeleinrichtung (20) und/oder die Beförderungseinrichtung (22) und/oder die Trenneinrichtung (24) zu steuern.
